# EUROPÄISCHE PATENTSCHRIFT

(11) **EP 3 087 464 B1**
(45) Veröffentlichungstag und Bekanntmachung des Hinweises auf die Patenterteilung: **10.03.2021**
(21) Anmeldenummer: 14825099.6
(22) Anmeldetag: 18.12.2014
(51) Int. Cl.: G06F 3/0481, G05B 19/00, G06Q 10/06

(54) **NAVIGATIONSVORRICHTUNG UND VERFAHREN ZUR DARSTELLUNG EINES NAVIGATIONSBAUMS AN EINEM ANZEIGEGERÄT**
NAVIGATION DEVICE AND METHOD FOR DISPLAYING A NAVIGATION TREE ON A DISPLAY UNIT
DISPOSITIF DE NAVIGATION ET PROCÉDÉ POUR REPRÉSENTER UN ARBRE DE NAVIGATION AU NIVEAU D'UN DISPOSITIF D'AFFICHAGE

(30) Priorität: 23.12.2013 DE 102013021791; 09.05.2014 DE 102014006700
(43) Veröffentlichungstag der Anmeldung: 02.11.2016
(73) Patentinhaber: SEW-EURODRIVE GmbH & Co. KG, 76646 Bruchsal (DE)
(72) Erfinder: REICHLE, Robert, 76297 Stutensee (DE); GAUL, Manfred, 76709 Kronau (DE); NICKLIS, Stephan, 64372 Ober-Ramstadt (DE); HORNUNG, Christian, 76461 Muggensturm (DE); NISSEL, Desiree, 68794 Oberhausen-Reinhausen (DE); SCHNEIDER, Stephan, 76646 Bruchsal (DE); PFETZING, Rima, 76646 Bruchsal (DE); SCHILLING, Anne, 76137 Karlsruhe (DE); REINHARDT, Daniel, 71263 Weil der Stadt (DE)
(86) Internationale Anmeldenummer: PCT/EP2014/003433
(87) Internationale Veröffentlichungsnummer: WO 2015/096898

(56) Entgegenhaltungen:
- DE-A1- 10 117 030
- DE-A1-102012 208 457

## Beschreibung

Die Erfindung betrifft eine Navigationsvorrichtung und ein Verfahren zur Darstellung eines Navigationsbaums an einem Anzeigegerät.

Derartige Vorrichtungen und Verfahren sind vielfältig bekannt, beispielsweise von dem Programm "Windows Explorer" der Firma Microsoft.

Gerade bei umfangreichen Navigationsbäumen besteht die Herausforderung darin, eine Navigation in dem Navigationsbaum zu ermöglichen, ohne dass ein Benutzer die Übersicht aufgrund der Informationsfülle verliert.

In der DE 10 2012 208 457 A1 ist eine Anzeige- und Bedienvorrichtung für eine Leitwarte zur Prozessvisualisierung eines Netzwerkes umfassend einer Vielzahl von Netzknoten und jeweils zwei Netzknoten verbindende Netzlinien vorgeschlagen. Hierbei ist jedoch eine auf einen Fokuspunkt bezogene, ungefilterte Vergrößerung undefinierter Bildelemente vorgesehen.

Die DE 101 17 030 A1 betrifft ein Verfahren zur Wiedergabe von in einem Speichermedium hinterlegten, bildhaft strukturierten Informationen auf einem Bildschirm einer mit einem Speichermedium gekoppelten Rechenanlage, wobei ein Darstellungsmaßstab veränderbar ist.

Der Erfindung liegt die Aufgabe zugrunde, eine Navigationsvorrichtung zu schaffen, welche computergestützt eine einfache, übersichtliche Navigation in einem komplexen Navigationsbaum ermöglicht.

Zur Lösung dieser Aufgabe sind bei einer Navigationsvorrichtung die Merkmale von Anspruch 1 und bei einem Verfahren zur Darstellung eines Navigationsbaums an einem Anzeigegerät die Merkmale von Anspruch 10 vorgeseher Bevorzugte Ausführungen der Erfindung sind den abhängigen Ansprüchen zu entnehmen.

Wichtige Merkmale der Erfindung einer Navigationsvorrichtung mit einer Speichereinrichtung, in welcher ein Navigationsbaum mit Knoten hinterlegt ist, wobei jeder Knoten einem Gerät einer Fertigungsanlage zugeordnet ist, wobei, die Knoten über gerichtete Links miteinander verbunden sind, wobei durch die gerichteten Links eine Ordnungsstruktur definiert ist, welche zu jedem Knoten übergeordnete Knoten und untergeordnete Knoten charakterisiert, hinterlegt ist, und mit einem Anzeigegerät, an welchem die Knoten zumindest in einer expandierten Anzeigeform und einer reduzierten Anzeigeform darstellbar sind, und mit einem Eingabemittel, mit welchem die Knoten einzeln anwählbar sind, wobei eine Ansteuerungseinheit des Anzeigegeräts ausgebildet ist, welche eine Überführung eines Knotens in die expandierte Anzeigeform bei Anwahl dieses Knotens auslöst, sind, dass in dem angewählten Knoten in der expandierten Anzeigeform Schaltflächen ausgebildet sind, mit welchen das dem Knoten zugeordnete Gerät ansteuerbar, parametrierbar, auslesbar oder auf sonstige Weise bedienbar oder verwaltbar ist, wobei die Ansteuerungseinheit eine Steuerverbindung zu dem jeweils dem ausgewählten Knoten zugeordneten Gerät besitzt, dass die Ansteuerungseinheit zu einer automatischen, durch die Anwahl ausgelösten Überführung eines diesem angewählten Knoten übergeordneten Knoten in die reduzierte Anzeigeform eingerichtet ist. Von Vorteil ist dabei, dass eine Informationsreduktion in der aktuellen Navigation nicht benötigter Zweige des Navigationsbaums computergestützt, also automatisch ausführbar ist. Hierdurch ist erreichbar, dass einem Benutzer genau die Information angezeigt wird, die er momentan benötigt. Bevorzugt ist der erwähnte übergeordnete Knoten ein zuvor angewählter Knoten. Die Erfindung ermöglicht es somit, von einem Knoten durch Anwahl zum nächsten Knoten zu wechseln, wobei der zuvor angewählte Knoten in die reduzierte Anzeigeform überführt wird.

Bei der Erfindung ist vorgesehen, dass die Ansteuerungseinheit zur Reduzierung der zu einem Knoten am Anzeigegerät dargestellten Links zu direkt diesem Knoten untergeordneten Knoten bei einer Überführung in die reduzierte Anzeigeform eingerichtet ist. Von Vorteil ist dabei, dass Links zu Knoten, die bei der aktuellen Navigation nicht von Interesse sind, reduzierbar, also z. B. vollständig ausblendbar, sind. Somit ist der Navigationsbaum für die Anzeige am Anzeigegerät vereinfachbar, indem momentan nicht benötigte Informationen ausgeblendet werden.

Bei einer vorteilhaften Ausgestaltung der Erfindung ist vorgesehen, dass die Ansteuerungseinheit zur Auswahl aller mit einem angewählten Knoten verknüpften Links zu direkt untergeordneten Knoten und Darstellung der Auswahl an dem Anzeigegerät eingerichtet ist. Von Vorteil ist dabei, dass dem Benutzer alle Möglichkeiten, im Navigationsbaum eine Stufe tiefer zu steigen, anzeigbar sind. Von Vorteil ist weiter, dass mit einem Klick jeder untergeordnete Knoten direkt anwählbar ist.

Bei einer vorteilhaften Ausgestaltung der Erfindung ist vorgesehen, dass der Navigationsbaum einen Startknoten hat, zu dem kein übergeordneter Knoten existiert, und dass zu jedem Knoten des Navigationsbaumes durch die Ordnungsstruktur eine Folge von Links festgelegt ist, über welche dieser Knoten mit dem Startknoten verbunden ist. Von Vorteil ist dabei, dass ein Anfang des Navigationsbaums und ein Start eines Navigationsverfahrens definierbar sind. Von Vorteil ist dabei, dass automatisch sichergestellt ist, dass jeder Knoten über mindestens eine Folge von Links mit jedem anderen Knoten des Navigationsbaums verbunden ist. Bevorzugt ist der Navigationsbaum so strukturiert, dass jeder Knoten über genau eine Folge von Links mit jedem weiteren Knoten des Navigationsbaums verbunden ist. In diesem Fall sind beispielsweise keine geschlossenen Wege vorhanden.

Bei einer vorteilhaften Ausgestaltung der Erfindung ist vorgesehen, dass eine Folge von Links, beispielsweise die bereits erwähnte Folge von Links, mit ihren zugehörigen Knoten einen Navigationspfad definiert und die Ansteuerungseinheit zur Darstellung der übergeordneten Knoten des Navigationspfads zu einem angewählten Knoten am Anzeigegerät eingerichtet ist. Von Vorteil ist dabei, dass eine Verbindung zu einem Startknoten anzeigbar ist. Somit ist dem Benutzer die momentane Position im Navigationsbaum leicht erfassbar anzeigbar, in dem eine (kürzeste) Verbindung zum Startknoten am Anzeigegerät dargestellt ist.

Hierbei ist in einer vorteilhaften Ausgestaltung vorgesehen, dass die Ansteuerungseinheit zum Ausblenden von untergeordneten Knoten, die zu einem nicht angewählten Knoten des Navigationspfads untergeordnet sind und nicht zum Navigationspfad gehören, eingerichtet ist. Von Vorteil ist dabei, dass ein vereinfachter Navigationspfad darstellbar ist. Alternativ oder zusätzlich ist bei einer vorteilhaften Ausgestaltung vorgesehen, dass die Ansteuerungseinheit zum Ausblenden von Links von nicht angewählten Knoten des Navigationspfads zu untergeordneten Knoten, die nicht zum Navigationspfad gehören, eingerichtet ist. Von Vorteil ist dabei, dass eine weitere Möglichkeit zur Informationsreduktion für eine leichter erfassbare Darstellung des Navigationspfads geschaffen ist.

Bevorzugt ist die Ansteuerungseinrichtung allgemein so eingerichtet, dass zu jedem Zeitpunkt immer genau ein Knoten als angewählter Knoten dargestellt ist.

Bei einer vorteilhaften Ausgestaltung der Erfindung ist vorgesehen, dass die Ansteuerungseinheit zu einer Auswahl von Knoten und Links für eine Darstellung am Anzeigegerät, bei welcher Abzweigungen vom Navigationspfad eliminiert sind, und zu einer Darstellung der Auswahl am Anzeigegerät eingerichtet ist. Von Vorteil ist dabei, dass der Navigationspfad verzweigungsfrei darstellbar ist. Bevorzugt erfolgt die Auswahl so, dass nur zum Navigationspfad gehörende Knoten und/oder nur im Navigationspfad enthaltene Links ausgewählt werden oder auswählbar sind.

Bevorzugt ist die Ansteuerungseinheit zur automatischen Ermittlung eines Navigationspfads zu einem Knoten eingerichtet. Von Vorteil ist dabei, dass auf einfache Weise relevante Informationen des Navigationsbaums extrahierbar sind.

Bei einer vorteilhaften Ausgestaltung der Erfindung ist vorgesehen, dass die Ansteuerungseinheit zu einer vorzugsweise automatischen Auswahl von wenigstens einem Link zu jedem dargestellten Knoten und zu einer Darstellung der Auswahl am Anzeigegerät eingerichtet ist. Somit sind die darzustellenden Knoten untereinander verbunden darstellbar. Hierfür nicht benötigte Links sind in der Darstellung unterdrückbar, indem sie beispielsweise nicht für die Darstellung ausgewählt werden. Bevorzugt erfolgt die Darstellung der Knoten des Navigationspfads - abgesehen vom momentan angewählten Knoten - in der reduzierten Anzeigeform oder in einer noch weiter informationsreduzierten Anzeigeform. Bevorzugt ist die Ansteuerungseinheit zur Auswahl von jeweils einem Link aus der Menge der im Anzeigebaum eingerichteten Links eingerichtet, der zwei darzustellende Knoten verbindet.

Bei einer vorteilhaften Ausgestaltung der Erfindung ist vorgesehen, dass die Ansteuerungseinheit zur Auswahl von höchstens zwei Links zu jedem darzustellenden, nicht angewählten Knoten, wobei die Links direkt mit dem jeweiligen Knoten verknüpft sind, und zu einer Darstellung der Auswahl am Anzeigegerät eingerichtet ist. Von Vorteil ist dabei, dass ein einfaches Mittel gegeben ist, einen verzweigungsfreien Teil des Navigationsbaums, insbesondere den bereits erwähnten Navigationspfad, darzustellen. Eine direkte Verknüpfung mit einem Knoten ist beispielsweise dadurch charakterisierbar, dass zwischen dem Link und dem Knoten weder ein weiterer Link noch ein weiterer Knoten im Navigationsbaum vorhanden ist.

Bei einer vorteilhaften Ausgestaltung der Erfindung ist vorgesehen, dass das Eingabemittel einen Zeiger aufweist, wobei das Eingabemittel zur Anwahl eines Knotens durch Platzieren des Zeigers über dem dargestellten Knoten und anschließendes Aktivieren eingerichtet ist. Von Vorteil ist dabei, dass eine grafisch unterstützte Navigation ermöglicht ist. Beispielsweise ist als Eingabemittel eine Maus, ein Trackball, ein Joystick, ein Grafiktablett, ein berührempfindliches Display oder ein sonstiges Eingabemittel verwendbar.

Bei einer vorteilhaften Ausgestaltung der Erfindung ist vorgesehen, dass die Ansteuerungseinheit dazu eingerichtet ist, von einer Standard-Anzeigeform für alle direkt untergeordneten Knoten zu einem angewählten und/oder in der expandierten Anzeigeform dargestellten Knoten in eine verminderte Anzeigeform umzuschalten, wenn die Anzahl der direkt untergeordneten Knoten einen Schwellwert überschreitet. Von Vorteil ist dabei, dass die Darstellung übersichtlicher einrichtbar ist. Die verminderte Anzeigeform ist hierbei beispielsweise durch Weglassen von Informationen, die dem Knoten zugeordnet hinterlegt sind, von der Standard-Anzeigeform unterscheidbar oder unterschieden.

Bei einer vorteilhaften Ausgestaltung der Erfindung ist vorgesehen, dass die Ansteuerungseinheit für eine Tooltip-Funktion eingerichtet ist. Von Vorteil ist dabei, dass Informationen, die mit dargestellten Knoten und/oder dargestellten Links hinterlegt und zur Informationsreduktion momentan nicht angezeigt sind, anzeigbar sind. Tooltip-Funktionen sind bekannt, beispielsweise die Mouseover-Funktion.

Hierbei ist in einer vorteilhaften Ausgestaltung vorgesehen, dass die Ansteuerungseinheit zur Überführung eines Knotens von einer verminderten Anzeigeform in eine vergrößerte Anzeigeform durch Platzieren eines Zeigers, beispielsweise des bereits erwähnten Zeigers, über den Knoten eingerichtet ist. Von Vorteil ist dabei, dass ein einfach handhabbares Verfahren ausführbar ist, mit welchem zusätzliche Informationen in einer informationsreduzierten Darstellung des Navigationsbaums ermöglicht sind. Hierbei ist vorsehbar, dass die vergrößerte Anzeigeform wenigstens ein dem Knoten zugeordnetes zusätzliches Symbol und/oder wenigstens eine dem Knoten zugeordneten Textinformation enthält.

Bei einer vorteilhaften Ausgestaltung der Erfindung ist vorgesehen, dass die Ansteuerungseinheit zu einer Ermittlung einer Tiefenzahl für den aktuell angewählten Knoten und/oder einer Anzahl von Knoten im momentan dargestellten Navigationspfad eingerichtet ist. Bevorzugt ist hierbei vorgesehen, dass die Ansteuerungseinheit eine Zähleinrichtung aufweist, die zur Ermittlung der Tiefenzahl und/oder der Anzahl eingerichtet ist, beispielsweise durch Programmierung. Von Vorteil ist dabei, dass die Ermittlung automatisiert ausführbar ist. Es ist bevorzugt eine Tiefenzahl, welche eine Tiefe eines Knotens im Navigationspfad und/oder in einer Hierarchie des Navigationsbaums charakterisiert, verwendbar. Besonders günstig ist es dabei, wenn die Ansteuerungseinheit eine vorgegebene Anzahl von Knoten automatisch in eine miniaturisierte Anzeigeform überführt, wenn die Anzahl von Knoten im momentan dargestellten Navigationspfad und/oder eine Tiefenzahl des aktuell angewählten Knotens einen Schwellwert überschreitet/überschreiten. Von Vorteil ist dabei, dass der Navigationspfad in voller Länge übersichtlich darstellbar bleibt, auch wenn - beispielsweise mit fortschreitender Tiefe im Navigationsbaum - der Navigationspfad immer länger wird. Es ist so ein Mittel zur Hand gegeben, dem Benutzer beim Navigieren jederzeit die momentane Position im Navigationsbaum leichter erfassbar zu präsentieren.

Bei einer vorteilhaften Ausgestaltung der Erfindung ist vorgesehen, dass die Ansteuerungseinheit zur Darstellung der Links von einem angewählten und/oder in der expandierten Anzeigeform dargestellten Knoten zu allen unmittelbar untergeordneten Knoten und zur Darstellung dieser unmittelbar untergeordneten Knoten eingerichtet ist. Die Ansteuerungseinheit steuert hier entsprechend die Anzeigeeinheit an. Von Vorteil ist dabei, dass die tiefer gelegenen Knoten, also untergeordneten, im Verzweigungsbaum zu einem angewählten Knoten oder zu einem in der expandierten Anzeigeform dargestellten Knoten anzeigbar sind, um dem Benutzer ein Fortschreiten im Navigationsbaum zu ermöglichen. Hierbei ist bei einer vorteilhaften Ausgestaltung vorgesehen, dass die Links durch Segmente des momentan angewählten Knotens, an denen sie jeweils enden, kopiert sind. Von Vorteil ist dabei, dass inhaltliche Gruppierungen des Verzweigungsbaums übersichtlich darstellbar sind.

Besonders günstig ist es, wenn die untergeordneten Knoten kreisförmig und/oder in Umfangsrichtung, vorzugsweise gleichmäßig in Umfangsrichtung verteilt, um den angewählten und/oder in der expandierten Anzeigeform dargestellten Knoten angeordnet sind. Auf diese Weise ist eine besonders einfach erfassbare grafische Darstellung geschaffen. Statt einer Kreisform sind auch andere Formen, beispielsweise Sechsecke oder andere Polygone, durch die Anordnung der untergeordneten Knoten um den angewählten und/oder in der expandierten Anzeigeform dargestellten Knoten beschreibbar.

Bei einer vorteilhaften Ausgestaltung der Erfindung ist vorgesehen, dass die Ansteuerungseinheit zur Überführung der expandierten Anzeigeform eines Knotens in eine lineare Anzeigeform, in welcher zu jedem Link und zu jedem Segment ein Listeneintrag einer Liste generiert wird, eingerichtet ist. Von Vorteil ist dabei, dass eine alternative Darstellungsart oder Anzeigeform bereitstellbar ist, wobei dem Benutzer nach Wahl ein Wechsel zwischen den Darstellungsformen ermöglicht ist.

Hierbei ist in einer vorteilhaften Ausgestaltung vorgesehen, dass die Listeneinträge von zu einem Segment zugeordneten Links jeweils eine Unterliste bilden. Von Vorteil ist dabei, dass auf einfache Weise die grafische Strukturierung des Verzweigungsbaums mittels der Segmente in die lineare Anzeigeform überführbar ist.

Hierbei ist in einer vorteilhaften Ausgestaltung vorgesehen, dass die Listeneinträge zu Links zwischen zwei Segmenten in einem ersten Scrollmodus bei feststehenden Segmenten scrollbar sind. Von Vorteil ist dabei, dass die Information aus den Segmenten auch bei Scrollen der Listeneinträge zu den Links sichtbar bleibt. Besonders günstig ist es dabei, wenn in dem ersten Scrollmodus eine Unterliste, beispielsweise die bereits erwähnte Unterliste, von Listeneinträgen scrollbar ist. Somit ist erreichbar, dass nur die Listeneinträge, welche einem einzigen Segment zugeordnet sind, scrollbar sind. Bevorzugt ist ein weiteres Kriterium eingerichtet, bei dessen Erfüllung in den ersten Scrollmodus zurückgewechselt wird, beispielsweise für die folgende Unterliste.

Bei einer vorteilhaften Ausgestaltung der Erfindung ist vorgesehen, dass die Unterliste der Listeneinträge zu Links mit wenigstens einem benachbarten Listeneintrag zu einem Segment in einem zweiten Scrollmodus scrollbar ist. Von Vorteil ist dabei, dass ein Scrollen in der Gesamtliste ausführbar ist, indem die Unterliste mit dem benachbarten Listeneintrag zu einem Segment gemeinsam scrollbar ist.

Bei einer vorteilhaften Ausgestaltung der Erfindung ist vorgesehen, dass eine Scrollmodus-Umschalteinheit ausgebildet ist, welche prüft, ob ein Ende einer Unterliste von Listeneinträgen von Links beim Scrollen erreicht ist, und die automatisch von einem ersten Scrollmodus, beispielsweise dem bereits erwähnten Scrollmodus, in einen zweiten Scrollmodus, beispielsweise den bereits erwähnten Scrollmodus, wechselt, wenn das Ergebnis der Prüfung positiv ist. Von Vorteil ist dabei, dass zunächst ein Scrollen im ersten Scrollmodus und dann, ohne dass der Benutzer hier eingreifen muss, automatisch ein fortgesetztes Scrollen in der übergeordneten Struktur ermöglicht ist.

Hierbei ist bei einer vorteilhaften Ausgestaltung vorgesehen, dass der wenigstens eine benachbarte Listeneintrag zu einem Segment in Richtung des vorherigen Scrollens der Unterliste an die Unterliste angrenzt. Von Vorteil ist dabei, dass auf diese Weise einfach erreicht ist, dass ein Weiterscrollen für den Benutzer ermöglicht ist, wobei die Scrollmodus-Umschalteinheit automatisch ein Umschalten bewirkt, sobald das Ende einer Unterliste erreicht ist.

Einige wichtige Merkmale der Erfindung eines Verfahrens zur Darstellung eines Navigationsbaums an einem Anzeigegerät, wobei der Navigationsbaum Knoten aufweist, die über gerichtete Links miteinander verknüpft sind, wobei durch die gerichteten Links eine Ordnungsstruktur definiert ist, welche zu jedem Knoten übergeordnete Knoten und untergeordnete Knoten charakterisiert, und die Knoten des Navigationsbaums mit einem Eingabemittel anwählbar sind, wobei zur Darstellung der Knoten des Navigationsbaums an dem Anzeigegerät jeweils wenigstens eine expandierte Anzeigeform und eine reduzierte Anzeigeform vorgehalten werden, wobei die reduzierte Anzeigeform gegenüber der expandierten Anzeigeform einen verminderten Informationsgehalt wiedergibt, wobei zu einem angewählten Knoten wenigstens ein übergeordneter Knoten und wenigstens ein untergeordneter Knoten an dem Anzeigegerät dargestellt wird und wobei durch Anwählen des untergeordneten Knotens eine automatische Überführung des untergeordneten Knotens in die expandierte Anzeigeform ausgelöst wird, sind, dass durch Anwählen des untergeordneten Knotens eine automatische Überführung des zuvor angewählten Knoten in die reduzierte Anzeigeform ausgelöst wird. Von Vorteil ist dabei, dass automatisch eine Reduktion von nicht weiter für die Navigation momentan benötigten Informationsinhalten ausgeführt wird. Insbesondere wird somit erreicht, dass Nebenzweige des Navigationsbaums, die nicht direkt mit dem aktuell angewählten Knoten des Navigationsbaums zusammenhängen, reduziert, insbesondere ausgeblendet, werden oder bleiben. Für den Nutzer ist somit einfach erfassbar, an welcher Stelle des Navigationsbaums er sich befindet und welche Links ihm von dieser momentanen Position aus zur Verfügung stehen. Weitere Knoten des Navigationsbaums, die für den Nutzer erst in mehreren Schritten erreichbar sind, sind somit ausblendbar, um den Navigationsbaum übersichtlich darzustellen.

Bei der Erfindung ist vorgesehen, dass in der reduzierten Anzeigeform eines Knotens weniger Links zu direkt untergeordneten Knoten an dem Anzeigegerät dargestellt werden, als in der expandierten Anzeigeform. Von Vorteil ist dabei, dass die Reduzierung von dargestellten Links eines Knotens ein einfaches Mittel ist, um die Übersichtlichkeit einer Darstellung eines Anzeigebaums zu erhöhen. Besonders günstig ist es, wenn in der reduzierten Anzeigeform genau ein übergeordneter Knoten und genau ein untergeordneter Knoten mit den zugehörigen Links dargestellt sind. Bei einer vorteilhaften Ausgestaltung der Erfindung ist vorgesehen, dass ein Navigationsbaum einen Startknoten hat, zu dem kein übergeordneter Knoten existiert, und zu jedem Knoten des Navigationsbaums eine Folge von Links festgelegt ist, über welche dieser Knoten mit dem Startknoten verbunden ist. Von Vorteil ist dabei, dass ein Startpunkt für eine Navigation im Navigationsbaum vorgebbar ist, der für den Nutzer einfach auffindbar ist, indem er zu einem aktuell momentan angewählten Knoten jeweils den übergeordneten Knoten anwählt, bis das Verfahren endet. Bevorzugt wird der Navigationspfad nach Anwahl eines Knotens für diesen Knoten automatisch ermittelt, beispielsweise indem den Links gegen ihre Richtung, also zu den übergeordneten Knoten hin, gefolgt und die jeweils so erreichten Knoten registriert werden.

Hierbei ist in einer vorteilhaften Ausgestaltung vorgesehen, dass die Folge von Links einen Navigationspfad definiert und dass zu einem angewählten Knoten die übergeordneten Knoten des Navigationspfads am Anzeigegerät dargestellt werden. Von Vorteil ist dabei, dass für einen Benutzer die Positionierung des momentan angewählten Knotens im Navigationsbaum einfach präsentierbar ist, ohne dass der komplette Navigationsbaum dargestellt werden muss. Vielmehr hat sich herausgestellt, dass es ausreichend ist, den Navigationspfad, also die (kürzeste) Verbindung zwischen dem angewähltem Knoten und dem Startknoten, anzuzeigen.

Bei einer vorteilhaften Ausgestaltung der Erfindung ist vorgesehen, dass zu einem Knoten, der im Navigationspfad eines angewählten Knotens dargestellt wird, untergeordnete Knoten, die nicht zum Navigationspfad gehören, und/oder Links zu untergeordneten Knoten, die nicht zum Navigationspfad gehören, ausgeblendet werden. Von Vorteil ist dabei, dass auf einfache Weise eine verzweigungsfreie Darstellung eines Teils des Navigationsbaums bildbar ist. Dabei ist die Übersichtlichkeit für den Nutzer verbessert.

Bei einer vorteilhaften Ausgestaltung der Erfindung ist vorgesehen, dass zu jedem am Anzeigegerät dargestellten Knoten wenigstens ein mit dem Knoten verknüpfter Link dargestellt wird. Von Vorteil ist dabei, dass zu jedem Knoten wenigstens ein Weg zur Navigation in dem Navigationsbaum für den Nutzer dargestellt ist.

Bei einer vorteilhaften Ausgestaltung der Erfindung ist vorgesehen, dass der Navigationspfad abzweigungsfrei dargestellt wird. Von Vorteil ist dabei, dass momentan nicht benötigte Informationen wie Abzweigungen im Verzweigungsbaum jenseits des momentan angewählten Knotens ausblendbar sind, um die Komplexität des Navigationsbaums zu reduzieren.

Hierbei ist in einer vorteilhaften Ausgestaltung vorgesehen, dass die abzweigungsfreie Darstellung durch Elimination von Links in der Darstellung erfolgt. Auf diese Weise ist besonders einfach ein abzweigungsfreier Navigationspfad bildbar.

Bei einer vorteilhaften Ausgestaltung der Erfindung ist vorgesehen, dass zu jedem am Anzeigegerät dargestellten, nicht angewählten Knoten höchstens zwei direkt mit dem Knoten verknüpfte Links dargestellt werden. Von Vorteil ist dabei, dass weitere Links, die Abzweigungen darstellen, einfach unterdrückbar sind. Somit ist die Komplexität des Navigationsbaums auf den momentanen Informationsbedarf reduzierbar.

Bei einer vorteilhaften Ausgestaltung der Erfindung ist vorgesehen, dass ein Zeiger des Eingabemittels zum Anwählen eines Knotens über dem Knoten platziert und anschließend aktiviert wird. Von Vorteil ist dabei, dass auf einfache Weise ein Wechsel von einem angewählten Knoten zu einem anderen Knoten ausführbar ist. Beispielsweise ist ein Mausklick zur Aktivierung verwendbar.

Hierbei ist in einer vorteilhaften Ausgestaltung vorgesehen, dass ein Platzieren des Zeigers über einem Knoten eine Überführung des Knotens in eine vergrößerte Anzeigeform auslöst. Von Vorteil ist dabei, dass in der vergrößerten Anzeigeform zusätzlicher Informationsinhalt darstellbar ist, um dem Benutzer die Entscheidung zu ermöglichen, ob zu diesem Knoten zur weiteren Navigation gewechselt werden soll oder nicht.

Bei einer vorteilhaften Ausgestaltung der Erfindung ist vorgesehen, dass automatisch von einer Standard-Anzeigeform für alle direkt zu einem angewählten und/oder in der expandierten Anzeigeform dargestellten Knoten untergeordneten Knoten in eine verminderte Anzeigeform umgeschaltet wird, wenn die Anzahl der direkt untergeordneten Knoten einen Schwellwert überschreitet. Von Vorteil ist dabei, dass auch Navigationsbäume mit einem hohen Verzweigungsgrad übersichtlich darstellbar sind.

Bei einer vorteilhaften Ausgestaltung der Erfindung ist vorgesehen, dass eine Tooltip-Funktion realisiert wird. Hierbei ist eine Tooltip-Funktion beispielsweise als ein kleines Popup-Fenster in Anwendungsprogrammen charakterisierbar, das zusätzliche Informationen oder sonstige alternative Beschreibungen zu einem Element auf einer grafischen Benutzeroberfläche anzeigt. Von Vorteil ist dabei, dass eine Information, die beispielsweise in einer verminderten Anzeigeform unterdrückt ist, erneut anzeigbar ist.

Hierbei ist bei einer vorteilhaften Ausgestaltung vorgesehen, dass die Tooltip-Funktion die bereits beschriebene vergrößerte Anzeigeform realisiert.

Bei einer vorteilhaften Ausgestaltung der Erfindung ist vorgesehen, dass eine vorgegebene Anzahl von Knoten automatisch in eine miniaturisierte Anzeigeform überführt wird, wenn die Anzahl von Knoten im momentan dargestellten Navigationspfad einen Schwellwert überschreitet. Von Vorteil ist dabei, dass der Navigationspfad auf einfache Weise auch bei fortschreitender Tiefe des gewählten Knotens im Navigationsbaum übersichtlich haltbar ist.

Hierbei wird unter der Tiefe des gewählten Knotens seine Position im Navigationsbaum relativ zum Startknoten verstanden. Fortschreitende Tiefe bedeutet dabei zunehmender Abstand vom Startknoten.

Bei einer vorteilhaften Ausgestaltung der Erfindung ist vorgesehen, dass Links von einem angewählten und/oder in der expandierten Anzeigeform dargestellten Knoten zu allen unmittelbar ungeordneten Knoten und diese unmittelbar untergeordneten Knoten dargestellt werden. Von Vorteil ist dabei, dass alle Wege, die von einem angewählten und/oder in der expandierten Anzeigeform dargestellten Knoten abzweigen, für den Benutzer sichtbar sind.

Hierbei ist in einer vorteilhaften Ausgestaltung vorgesehen, dass die Links durch Segmente des momentan angewählten Knotens, an denen diese jeweils enden, gruppiert werden. Von Vorteil ist dabei, dass eine thematische Strukturierung des Navigationsbaums abbildbar ist.

Bei einer vorteilhaften Ausgestaltung der Erfindung ist vorgesehen, dass die expandierte Anzeigeform eines Knotens in eine lineare Anzeigeform, in welcher zu jedem Link und zu jedem Segment ein Listeneintrag einer Liste generiert wird, überführt wird. Von Vorteil ist dabei, dass eine alternative Anzeigeform generierbar ist, die bei bestimmten Nutzergruppen eine größere Akzeptanz auslöst.

Bevorzugt sind die Listeneinträge als Text darstellbar, so dass spezifische Bezeichnungen für den Benutzer in einfacher Weise auffindbar sind.

Hierbei ist in einer vorteilhaften Ausgestaltung vorgesehen, dass die Listeneinträge von zu einem Segment zugeordneten Links jeweils in einer Unterliste gruppiert werden. Von Vorteil ist dabei, dass die Strukturierung durch Segmente in der alternativen Anzeigeform abbildbar ist. Somit ist die Darstellung übersichtlich gestaltbar.

Bei einer Ausgestaltung der Erfindung ist vorgesehen, dass von einem ersten Scrollmodus, in welchem die Listeneinträge zu Links zwischen zwei Segmenten bei feststehenden Segmenten gescrollt wird, in einen zweiten Scrollmodus, in welchem die Unterliste der Listeneinträge zu Links mit wenigstens einem benachbarten Listeneintrag zu einem Segment gemeinsam gescrollt wird, umgeschaltet wird, wenn ein Anfang oder ein Ende einer Unterliste von Listeneinträgen von Links beim Scrollen erreicht ist. Besonders günstig ist es, wenn die Listeneinträge zwischen zwei Segmenten als Unterliste von Listeneinträgen vorliegen. Von Vorteil ist dabei, dass innerhalb der durch die Segmente geschaffenen Strukturierung die Listeneinträge getrennt voneinander scrollbar sind.

Hierbei ist bei einer vorteilhaften Ausgestaltung vorgesehen, dass der wenigstens eine benachbarte Listeneintrag zu einem Segment in Richtung des vorherigen Scrollens der Unterliste an die Unterliste angrenzt. Von Vorteil ist dabei, dass eine Scrollbewegung beim Wechsel vom ersten Scrollmodus in den zweiten Scrollmodus fortsetzbar ist.

Bei einer Ausgestaltung der Erfindung ist vorgesehen, dass in der vergrößerten Anzeigeform wenigstens ein dem Knoten zugeordnetes zusätzliches Symbol und/oder wenigstens eine dem Knoten zugeordnete Textinformation eingeblendet wird/werden. Von Vorteil ist dabei, dass eine Tooltip-Funktion oder Mouseover-Funktion realisierbar ist.

Besonders günstig ist es, wenn die zuvor beschriebene erfindungsgemäße Navigationsvorrichtung Mittel zur Ausführung eines erfindungsgemäßen Verfahrens aufweist und/oder wenn bei dem erfindungsgemäßen Verfahren eine erfindungsgemäße Navigationsvorrichtung verwendet wird.

Für eine besonders einfach erfassbare Darstellung ist bei einer vorteilhaften Ausgestaltung vorgesehen, dass die Anzeigeformen in zwei oder drei Einheitsgrößen ausgeführt sind. So ist zum Beispiel vorsehbar, dass die Standard-Anzeigeform und die vergrößerte Anzeigeform übereinstimmende Größenverhältnisse und/oder Informationsgehalte haben. Bei einer vorteilhaften Ausgestaltung ist vorgesehen, dass die verminderte Anzeigeform und die reduzierte Anzeigeform identisch ausgestaltet sind. Schließlich ist bei einer vorteilhaften Ausgestaltung vorgesehen, dass die verminderte Anzeigeform und die miniaturisierte Anzeigeform identisch (als Größe 1) ausgestaltet sind, während die vergrößerte Anzeigeform, die Standard-Anzeigeform und die reduzierte Anzeigeform ihrerseits identisch (als Größe 2) und größer als die verminderte Anzeigeform und die miniaturisierte Anzeigeform und kleiner als die expandierte Anzeigeform (als Größe 3) ausgestaltet sind.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder mit einzelnen oder mehreren Merkmalen des Ausführungsbeispiels, insbesondere bei der Lösung der sich aus dem Stand der Technik stellenden Aufgabe, sofern diese Merkmalskombinationen in den Ansprüchen enthalten sind.

Es zeigt:
Figur 1 eine erfindungsgemäße Navigationsvorrichtung in stark vereinfachter Blockdarstellung zur Erläuterung des Erfindungsprinzips,
Figur 2 den Teilschritt der Anwahl eines untergeordneten Knotens bei einem erfindungsgemäßen Verfahren zur Darstellung eines Navigationsbaums an einem Anzeigegerät in stark schematisierter, vereinfachter Darstellung,
Figur 3 den Teilschritt eines Übergangs in eine miniaturisierte Anzeigeform für Knoten im Navigationspfad bei einem erfindungsgemäßen Verfahren zur Darstellung eines Navigationsbaums an einem Anzeigegerät,
Figur 4 die Darstellung von untergeordneten Knoten zu einem angewählten Knoten in der verminderten Anzeigeform bei einem erfindungsgemäßen Verfahren,

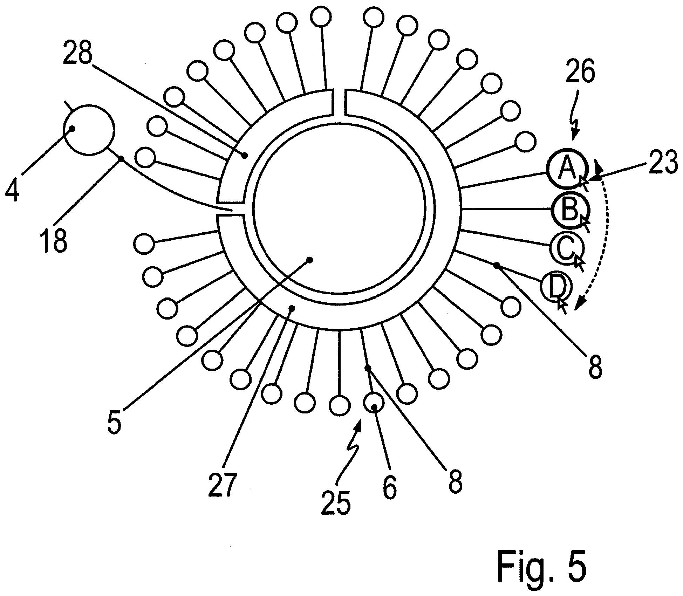

Figur 5 den Übergang von der verminderten Anzeigeform zu einer vergrößerten Anzeigeform bei Platzierung des Zeigers über einen Knoten bei einem erfindungsgemäßen Verfahren,
Figur 6 die Überführung von einer kreisförmigen Anordnung der untergeordneten Knoten in eine lineare Anzeigeform mit Listen von Listeneinträgen bei einem erfindungsgemäßen Verfahren und
Figur 7 die Strukturierung der expandierten Anzeigeform eines angewählten Knotens.

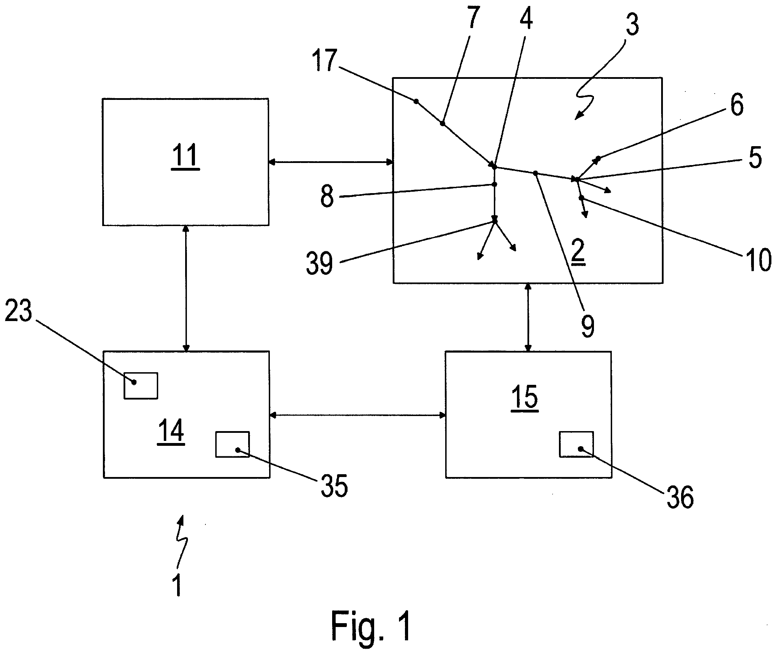

Eine im Ganzen mit 1 bezeichnete, in Figur 1 dargestellte erfindungsgemäße Navigationsvorrichtung hat eine Speichereinrichtung 2.

In der Speichereinrichtung 2 ist ein Navigationsbaum 3 hinterlegt, der Knoten 4, 5, 6 und 39 aufweist, die durch gerichtete Links 7, 8, 9 und 10 miteinander verknüpft sind.

Der Navigationsbaum 3 bildet beispielsweise eine Liste ab, wobei zu mindestens einem Listeneintrag der Liste eine Unterliste zuordenbar ist. Jeder Listeneintrag entspricht einem Knoten 4, 5, 6 und 39 und die Strukturverbindung von einem Listeneintrag der Unterliste zu einem übergeordneten Listeneintrag entspricht einem Link 7, 8, 9 und 10.

Der Navigationsbaum 3 ist hier stark vereinfacht dargestellt und bei den beschriebenen Ausführungsbeispielen tatsächlich viel komplexer. Die dargestellte Vereinfachung soll dazu dienen, den Erfindungsgedanken zu erläutern.

Durch die Richtung (hier die Pfeile) der gerichteten Links 7, 8, 9, 10 ist im Navigationsbaum 3 eine Ordnungsstruktur definiert, welche zu jedem Knoten 4, 5, 6 jeweils übergeordnete Knoten und untergeordnete Knoten charakterisiert. Beispielsweise ist der Knoten 4 zu dem Knoten 5 übergeordnet, während der Knoten 6 zu dem Knoten 5 untergeordnet ist. Der Knoten 39 ist zu dem Knoten 5 nebengeordnet und zu dem Knoten 4 untergeordnet.

Mittels des Navigationsbaums ist beispielsweise eine Fertigungsanlage abbildbar. Dabei ist die Fertigungsanlage selbst als ein Startknoten 17 darstellbar. Ein Fahrzeug der Fertigungsanlage ist als ein dem Startknoten 17 untergeordneter Knoten 4, 5, 6 und 39 darstellbar und ein Antrieb des Fahrzeugs ist als ein dem Knoten 4, 5, 6 und 39 des Fahrzeugs untergeordneter Knoten 4, 5, 6 und 39 darstellbar. Der Startknoten ist also dem Knoten 4, 5, 6 und 39 des Fahrzeugs übergeordnet.

Die Navigationsvorrichtung 1 hat weiter ein Anzeigegerät 11, mit welchem Teile des Navigationsbaums 3 für eine Navigation darstellbar sind.

Als Anzeigegerät 11 ist beispielsweise ein Bildschirm oder ein Tablet-Computer oder ein Smartphone verwendbar.

An dem Anzeigegerät 11 sind die Knoten 4, 5, 6 und 39 jeweils in unterschiedlichen Anzeigeformen darstellbar. Vorzugsweise weisen die verschiedenen Anzeigeformen einen unterschiedlichen Funktionsumfang auf, beispielsweise Schaltflächen und/oder Statusanzeigen. Die verschiedenen Anzeigeformen weisen unterschiedliche Größen auf. Dabei ist der Funktionsumfang einer größeren Anzeigeform größer als der Funktionsumfang einer kleineren Anzeigeform.

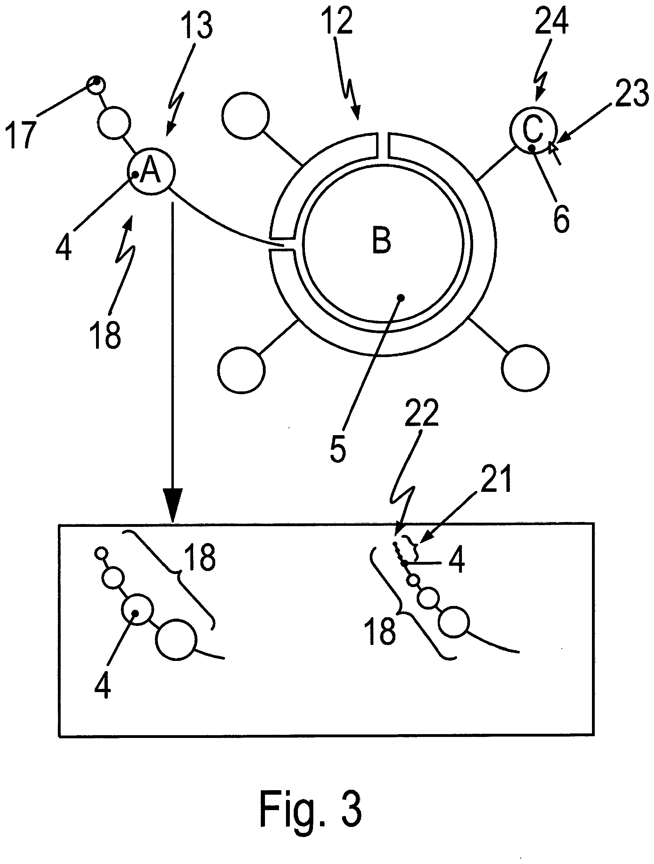

Figur 3 zeigt beispielsweise den Knoten 5 in einer expandierten Anzeigeform 12 und den Knoten 4 in einer reduzierten Anzeigeform 13. Vorzugsweise ist die expandierte Anzeigeform 12 größer als die reduzierte Anzeigeform 13 und weist einen größeren Funktionsumfang auf.

Die Navigationsvorrichtung 1 hat weiter ein Eingabemittel 14, mit welchem das Anzeigegerät 11 und eine Ansteuerungseinheit 15 bedienbar und manipulierbar sind. Als Eingabemittel 14 ist beispielsweise eine Computermaus oder ein Trackball oder eine Tastatur verwendbar.

Mit dem Eingabemittel 14 sind insbesondere die Knoten 4, 5, 6 individuell anwählbar, insbesondere anklickbar, beispielsweise mittels Doppelklick.

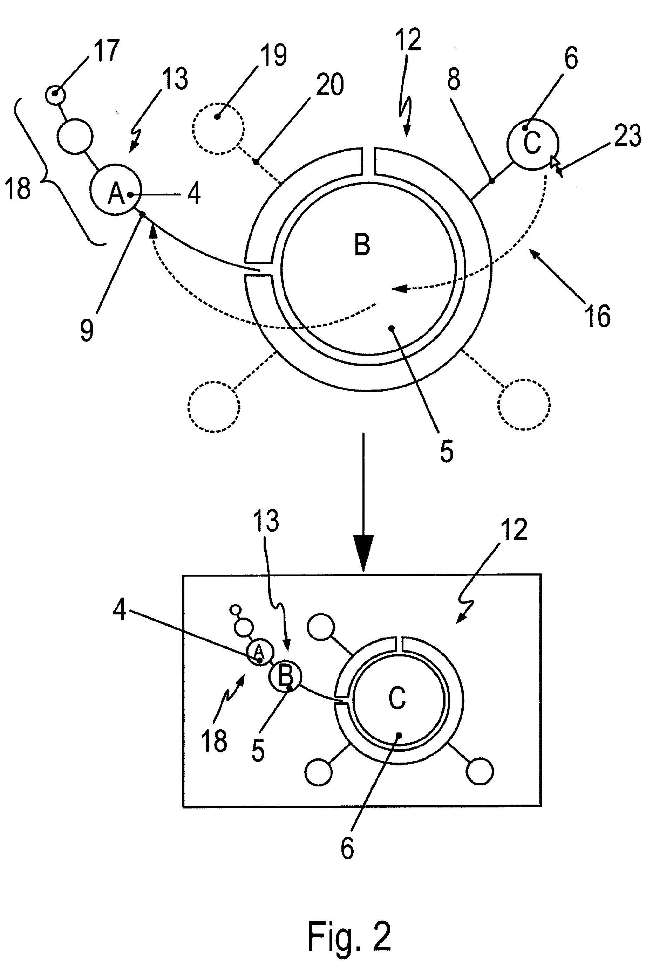

Figur 2 zeigt das Anwählen eines derartigen Knotens 6.

Der obere Teil der Figur 2 zeigt hierbei die Situation vor dem Anwählen 16. Der zuvor angewählte Knoten 5 ist in der expandierten Anzeigeform 12 dargestellt, während der übergeordnete Knoten 4 in der reduzierten Anzeigeform 13 dargestellt ist.

Zur besseren Nachverfolgbarkeit des Prozesses sind die Knoten 4, 5, 6 beispielhaft mit abstrakten Inhalten "A", "B" bzw. "C" befüllt. Durch das Anwählen 16 des untergeordneten Knotens 6 mit dem Eingabemittel 14 wird dieser Knoten 6 in die expandierte Anzeigeform 12 überführt.

Diese expandierte Anzeigeform 12 ist dadurch charakterisiert, dass zu dem jeweils angewählten Knoten 5 alle direkt verknüpften Links 8 des Navigationsbaums 3 und alle direkt untergeordneten Knoten 6 des Navigationsbaums 3 dargestellt bzw. angezeigt sind. In Figur 2 existiert beispielhaft nur ein untergeordneter Knoten 6 zu dem Knoten 5.

Die Ansteuerungseinheit 15 überführt den Knoten 6 nach dem Anwählen 16 in die bereits beschriebene expandierte Anzeigeform 12.

Gleichzeitig überführt die Ansteuerungseinheit 15 den zuvor angewählten Knoten 5 in die reduzierte Anzeigeform 13.

In der reduzierten Anzeigeform 13 werden alle Links und Knoten, die nicht auf den momentan angewählten Knoten 5 führen, ausgeblendet. So sind zu dem Knoten 5 alle untergeordneten Knoten 6 dargestellt, während zu dem Knoten 4 der untergeordnete Knoten 39 ausgeblendet ist.

In der reduzierten Anzeigeform 13 eines Knotens 4, 5, 6 werden daher weniger Links 7, 8, 9, 10 zu direkt untergeordneten Knoten 4, 5, 6 an dem Anzeigegerät 11 dargestellt, als in der expandierten Anzeigeform 12. In der expandierten Anzeigeform 12 werden dagegen alle direkt untergeordneten Knoten 4, 5, 6 zu dem momentan angewählten Knoten 4, 5, 6 und die zugehörigen Links 7, 8, 9, 10 an dem Anzeigegerät 11 dargestellt.

Figur 2 zeigt in der unteren Hälfte die Darstellung des Teils des Navigationsbaums 3 nach Anwählen 16 des Knotens 6 "C".

Es ist ersichtlich, dass der Knoten 6 in der expandierten Anzeigeform 12 dargestellt ist, während der zuvor angewählte Knoten 5 nun in eine reduzierte Anzeigeform 13 überführt ist.

Die expandierte Anzeigeform 12 des Knotens 6 wird dadurch erzeugt, dass weitere Knoten 19 und weitere Links 20 eingeblendet werden, die zu untergeordneten Knoten bezüglich des Knotens 6 gehören. Es ergibt sich somit die Situation der unteren Bildhälfte von Figur 2.

In Figur 2 ist ersichtlich, dass der Startknoten 17 keinen übergeordneten Knoten hat.

Der Navigationsbaum 3 ist so ausgestaltet, dass zu jedem Knoten 4, 5, 6 genau eine Folge von Links 7, 8, 9, 10 festgelegt ist, über welche dieser Knoten 4, 5, 6 mit dem Startknoten 17 verbunden ist.

Beispielsweise ist in Figur 1 in dem Navigationsbaum 3 der Knoten 5 über die Links 9 und 7 mit dem Startknoten 17 verbunden.

Eine einfache Möglichkeit, den Startknoten 17 aufzufinden, ist dadurch gegeben, dass den Links 7, 8, 9, 10 entgegen ihrer definierten Richtung gefolgt wird, bis keine Links für ein Fortschreiten verfügbar sind.

Die definierte Richtung der Links ist dabei diejenige Richtung, die von einem Knoten 4, 5, 6 zu einem diesem Knoten 4, 5, 6 direkt untergeordneten Knoten 4, 5, 6 weist.

Die erwähnte Folge von Links 7, 8, 9, 10 und Knoten 4, 5, 6 zwischen einem angewählten Knoten 5 und dem Startknoten 17 bildet einen Navigationspfad 18. Vorzugsweise ist jedem Knoten 4, 5, 6 genau einen Navigationspfad 18 zugeordnet.

Im oberen Teil der Figur 3 ist ersichtlich, dass die übergeordneten Knoten 4 zu einem angewählten Knoten 5 in der reduzierten Anzeigeform 13 dargestellt sind.

Mit fortschreitender Tiefe, also in der definierten Richtung der Links 7, 8, 9, 10, im Navigationsbaum 3 nimmt die Zahl der Knoten 4 im Navigationspfad 18 zu. Sobald die Anzahl der Knoten 4 im Navigationspfad 18 einen Schwellwert überschreitet, überführt die Ansteuerungseinheit 15 eine vorgegebene Anzahl 21 von Knoten 4 in eine miniaturisierte Anzeigeform 22.

Die Ansteuerungseinheit 15 weist hierzu eine Zähleinrichtung auf, welche zur Ermittlung einer Tiefenzahl zu dem aktuell angewählten Knoten 5, welche die Tiefe des Knotens 5 im Navigationspfad 18 charakterisiert, und/oder zur Ermittlung einer Zahl von Knoten 4 im Navigationspfad 18 eingerichtet ist. Dies ist beispielsweise durch Programmierung der Ansteuerungseinheit 15 einrichtbar.

Hierdurch ist Platz an dem Anzeigegerät 11 einsparbar, so dass der Navigationspfad 18 vollständig anzeigbar bleibt.

Aus den Figur 2, 3 und 4 ist ersichtlich, dass der Navigationspfad 18 abzweigungsfrei angezeigt ist.

Dies wird dadurch erreicht, dass die Ansteuerungseinheit 15 für die Darstellung am Anzeigegerät 11 Knoten 4, 5, 6 und Links 7, 8, 9, 10 auswählt, wobei in der Darstellung Abzweigungen vom Navigationspfad 18 eliminiert sind.

Im Navigationspfad 18 wird daher zu jedem Knoten 4, 5, 6 jeweils genau ein Link 7, 8, 9, 10 zu einem übergeordneten Knoten 4 und genau ein Link 7, 8, 9, 10 zu einem untergeordneten 6 ausgewählt und zur Anzeige gebracht. Diese Auswahl erfolgt durch die Ansteuerungseinheit 15. Die Ansteuerungseinheit 15 wählt somit automatisch zu jedem Knoten 4, 5, 6 genau zwei Links 7, 8, 9, 10 aus den verfügbaren Links im Navigationsbaum 18 aus.

Das Anwählen 16 der Knoten 4, 5, 6 geschieht mit einem Zeiger 23 des Eingabemittels 14. Genauer gesagt erfolgt das Anwählen 16 eines Knotens 6 dadurch, dass der Zeiger 23 über den Knoten 6 platziert und anschließend aktiviert wird.

Figur 3 zeigt die expandierte Anzeigeform 12 eines Knotens 5 mit vier untergeordneten Knoten 6.

Die untergeordneten Knoten 6 sind hierbei in einer Standard-Anzeigeform 24 dargestellt. Die Standard-Anzeigeform 24 ist hierbei mit der reduzierten Anzeigeform 13 übereinstimmend ausführbar, oder es sind Unterschiede zwischen beiden Anzeigeformen möglich.

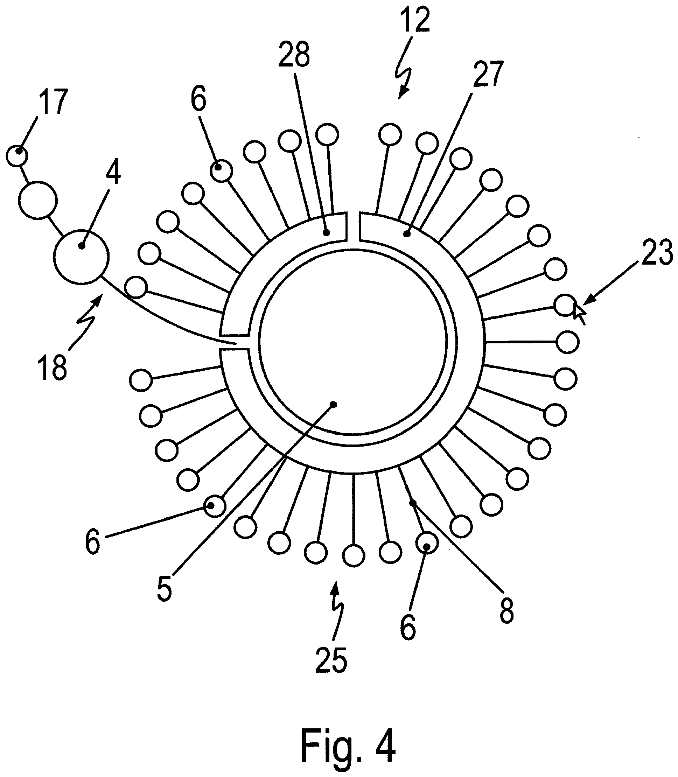

Figur 4 zeigt einen angewählten Knoten 5 in expandierter Anzeigeform 12, der eine Vielzahl von untergeordneten Knoten 6 aufweist.

Die Ansteuerungseinheit 15 steuert daher das Anzeigegerät 11 derart an, dass die untergeordneten Knoten 6 nicht in der Standard-Anzeigeform 24 gemäß Figur 3, sondern in einer verminderten Anzeigeform 25 dargestellt sind.

Die verminderte Anzeigeform 25 unterscheidet sich von der Standard-Anzeigeform 24 dadurch, dass der Informationsgehalt noch einmal reduziert ist.

Die Standard-Anzeigeform 24 unterscheidet sich von der expandierten Anzeigeform 12 zumindest dadurch, dass keine Links zu untergeordneten Knoten dargestellt sind.

Die verminderte Anzeigeform 25 unterscheidet sich von der Standard-Anzeigeform 24 zudem dadurch, dass keine Textinformationen oder Symbole in den Knoten 6 (hier generell zur Vereinfachung nicht dargestellt) enthalten sind.

Als Symbole sind beispielsweise vereinfachte Darstellungen von Antriebseinheiten einer Fertigungsanlage oder von Fahrzeugen verwendbar. Bevorzugt sind die verwendbaren Symbole für alle Knoten 4, 5, 6, 19, 39 in einer gemeinsamen Liste oder Datenbank, besonders bevorzugt in standardisierter Form, bereitstellbar, so dass die anzeigbaren Symbole einfach aktualisierbar und/oder definierbar sind.

Solche zusätzlichen Informationen sind aber mit einer Tooltip-Funktion oder Mouseover-Funktion wieder sichtbar machbar. Hierzu muss der Zeiger 23 über einen untergeordneten Knoten 6 in der verminderten Anzeigeform 25 platziert werden. Dies bewirkt, dass die Ansteuerungseinheit 15 automatisch den betreffenden Knoten 6 von der verminderten Anzeigeform 25 in eine vergrößerte Anzeigeform 26 überführt. Dies ist beispielsweise die bereits erwähnte Standard-Anzeigeform 24.

In den Figuren ist ersichtlich, dass die Links 8 zu untergeordneten Knoten 6 in Bezug auf einen angewählten und daher in der expandierten Anzeigeform 12 dargestellten Knoten an Segmenten 27, 28 enden.

Durch diese Segmente 27, 28 werden die Links 8 mit den zugehörigen untergeordneten Knoten 6 gruppiert.

Beispielsweise zeigt Figur 4, dass zu dem Segment 28 acht untergeordnete Knoten 6 zugeordnet sind, während zu dem Segment 27 sechsundzwanzig Knoten 6 zugeordnet sind.

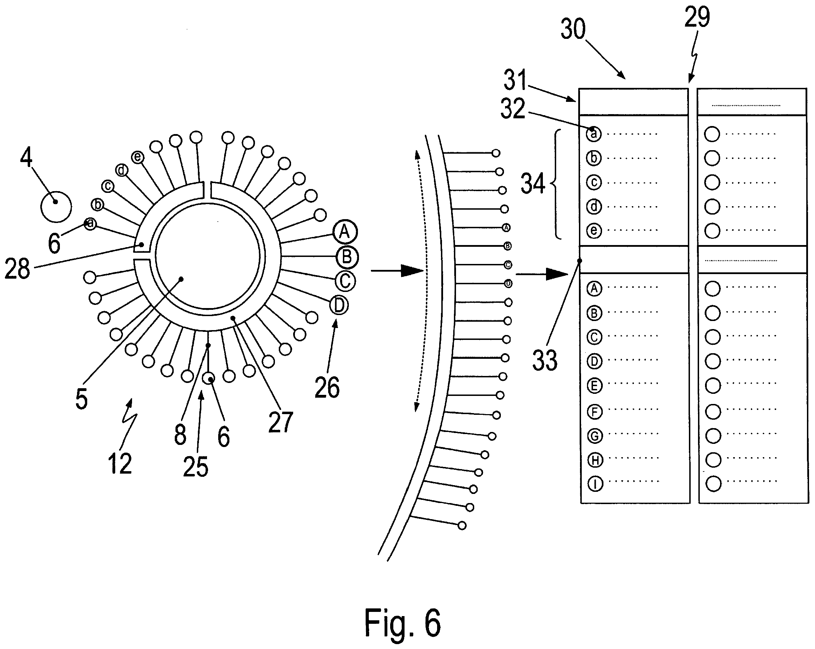

Die Ansteuerungseinheit 15 ist zum Wechsel oder Umschalten von der expandierten Anzeigeform 12 in eine lineare Anzeigeform 29 eingerichtet. Diesen Wechsel zeigt Figur 6.

In der linearen Anzeigeform 29 ist eine Liste 30 von Listeneinträgen 31, 32 und 33 generiert.

Hierbei sind die Listeneinträge 31 und 33 zu den Segmenten 28 und 27 generiert, während die Listeneinträge 32 (zur Vereinfachung ist nur ein Listeneintrag 32 bezeichnet) zu den untergeordneten Knoten 6 erzeugt werden.

Zur Verdeutlichung der inhaltlichen Korrespondenz sind die Knoten teilweise mit beispielhaften Textinhalten "a" bis e" bzw. "A" bis "D" befüllt, die in den Listeneinträgen 32 der linearen Anzeigeform 29 wiederholt werden.

Die Listeneinträge 32 zwischen dem Listeneintrag 31 zu einem ersten Segment 28 und einem Listeneintrag 33 zu einem zweiten Segment 27 bilden eine Unterliste 34.

Das Eingabemittel 14 verfügt über ein Scrollmittel 35, bei welchem jede Unterliste 34 für sich genommen derart scrollbar ist, dass die Listeneinträge 31, 33 zu benachbarten Segmenten 27, 28 in der Liste 30 unverändert bleiben. Sobald die Unterliste 34 während des Scrollens am Anfang oder am Ende angelangt ist, wird mit einer Scrollmodus-Umschalteinheit 36 in einen zweiten Scrollmodus umgeschaltet, in welchen die Liste 30 als Ganzes gescrollt wird. In diesem zweiten Scrollmodus werden daher nicht nur die Listeneinträge 32 der Unterliste 34, sondern auch die benachbarten Listeneinträge 31 und ggf. 33 mitgescrollt.

Vorzugsweise ist das Scrollmittel 35 als Scrollrad einer Computermaus ausgeführt. Unter Scrollen wird hierbei ein Bildlauf, also das Verschieben von Bildschirminhalten, verstanden.

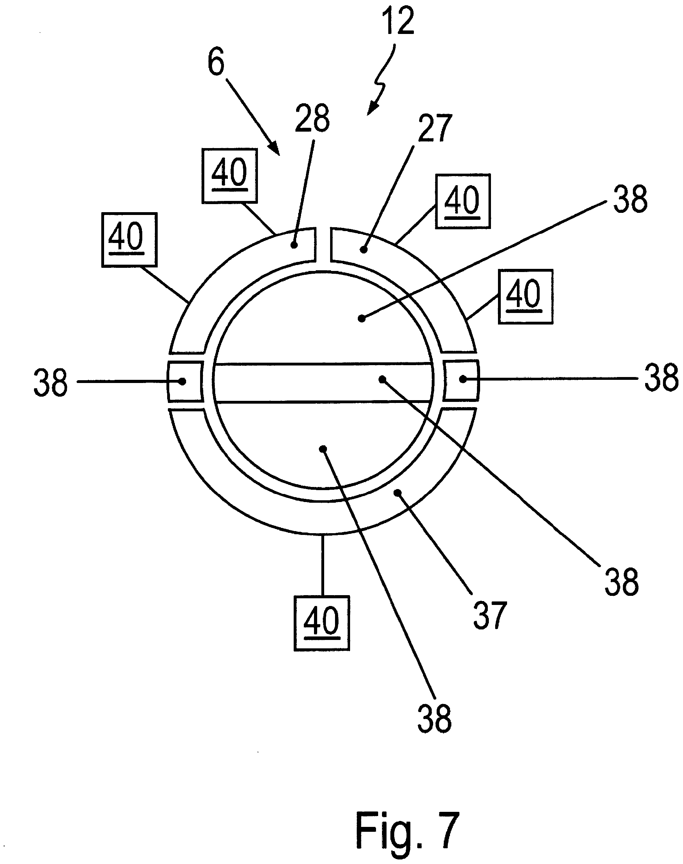

Figur 7 zeigt in detaillierter Weise die expandierte Anzeigeform 12, in welcher die vollständig verfügbare Information zu einem Knoten 6 darstellbar ist. Diesem Knoten 6 sind Endknoten 40 untergeordnet, die sich in der Funktion und der Anzeigeform von den übrigen Knoten 4, 5, 6 unterscheiden.

Es ist ersichtlich, dass die Endknoten 40 jeweils an einem Segment 27, 28 bzw. 37 angebunden sind.

Durch diese Segmente 27, 28, 37 wird eine inhaltlich thematische Gliederung erreicht. So ist das Segment 27 für den Antriebsstrang einer Fertigungsanlage, das Segment 28 für Schnittstellen zur Datenkommunikation oder zur mechanischen Vermittlung und das Segment 37 für Funktionen, die an den Knoten 6 realisiert sind, vorgesehen. Die Endknoten 40 an dem Segment 28 sind hierbei Bussystemen, Speichermedien, Ein- und Ausgabemitteln und dergleichen Mitteln der Datenverarbeitung zugeordnet, die Endknoten 40 an dem Segment 27 dagegen Motoren, Getrieben, Gebern, Umrichtern und dergleichen Einheiten der Antriebstechnik.

Allgemeiner beschreiben die Knoten 6 jeweils Geräte, wobei die gerichteten Links 7, 8, 9, 10 eine Ordnungsstruktur in diesen Geräten, beispielsweise eine Angabe, welches Gerät welchem Gerät zugeordnet ist, darstellen.

In dem Knoten 6 in der expandierten Anzeigeform 12 sind ferner Schaltflächen 38 ausgebildet, mit welchen das jeweils zugehörige Gerät ansteuerbar, parametrierbar, auslesbar oder auf sonstige Weise bedienbar oder verwaltbar ist. In Figur 7 sind beispielhaft in der Mitte von oben nach unten die folgenden Schaltflächen 38 im Knoten 6 bereitgestellt: "Geräteeigenschaften", "Signatur", "Verhalten". Rechts daneben ist eine Schaltfläche 38 "Tools", links daneben eine Schaltfläche 38 "Diagnose" angeordnet.

Hierzu hat die Ansteuerungseinheit 15 eine Steuerverbindung zu dem jeweils dem Knoten 6 zugeordneten Gerät.

Bei der Navigationseinrichtung 1 wird vorgeschlagen, Knoten 4, 5, 6, 39 eines in einer Speichereinrichtung 2 hinterlegten Navigationsbaums 3 dadurch darzustellen, dass ein angewählter Knoten 5 in einer expandierten Anzeigeform 12 und weitere Knoten 4, 6 in einer reduzierten Anzeigeform 13 an einem Anzeigegerät 11 angezeigt werden. Bei einer Anwahl 16 eines untergeordneten Knoten 4, 5, 6, 39 wird der zuvor angewählte Knoten 5 in eine in die reduzierte Anzeigeform 13 und der neu angewählte Knoten 6 in eine expandierte Anzeigeform 12 überführt.

### Bezugszeichenliste

- 1: Navigationsvorrichtung
- 2: Speichereinrichtung
- 3: Navigationsbaum
- 4, 5, 6: Knoten
- 7, 8, 9, 10: Link
- 11: Anzeigegerät
- 12: expandierte Anzeigeform
- 13: reduzierte Anzeigeform
- 14: Eingabemittel
- 15: Ansteuerungseinheit
- 16: Anwählen
- 17: Startknoten
- 18: Navigationspfad
- 19: Knoten
- 20: Link
- 21: vorgegebene Anzahl
- 22: miniaturisierte Anzeigeform
- 23: Zeiger
- 24: Standard-Anzeigeform
- 25: verminderte Anzeigeform
- 26: vergrößerte Anzeigeform
- 27,28: Segment
- 29: lineare Anzeigeform
- 30: Liste
- 31, 32, 33: Listeneintrag
- 34: Unterliste
- 35: Scrollmittel
- 36: Scrollmodus-Umschalteinheit
- 37: Segment
- 38: Schaltfläche
- 39: Knoten
- 40: Endknoten

## Patentansprüche

1. Navigationsvorrichtung (1) mit einer Speichereinrichtung (2), in welcher ein Navigationsbaum (3) mit Knoten (4, 5, 6, 19) hinterlegt ist, wobei jeder Knoten (4, 5, 6, 19) einem Gerät einer Fertigungsanlage zugeordnet ist, wobei die Knoten (4, 5, 6, 19) über gerichtete Links (7, 8, 9, 10) miteinander verknüpft sind, wobei durch die gerichteten Links (7, 8, 9, 10) eine Ordnungsstruktur definiert ist, welche zu jedem Knoten (4, 5, 6, 19) übergeordnete Knoten (4, 5, 6, 19) und untergeordnete Knoten (4, 5, 6, 19) charakterisiert, und mit einem Anzeigegerät (11), an welchem die Knoten (4, 5, 6, 19) zumindest in einer expandierten Anzeigeform (12) und einer reduzierten Anzeigeform (13) darstellbar sind, wobei in der reduzierten Anzeigeform eines Knotens weniger Links zu direkt untergeordneten Knoten an dem Anzeigegerät dargestellt werden, als in der expandierten Anzeigeform, und mit einem Eingabemittel (14), mit welchem die Knoten (4, 5, 6, 19) einzeln anwählbar sind, wobei eine Ansteuerungseinheit (15) des Anzeigegeräts (11) ausgebildet ist, welche eine Überführung eines Knotens (4, 5, 6, 19) in die expandierte Anzeigeform (12) bei Anwahl dieses Knotens (4, 5, 6, 19) auslöst, **dadurch gekennzeichnet, dass** in dem angewählten Knoten (6) in der expandierten Anzeigeform (12) Schaltflächen (38) ausgebildet sind, mit welchen das dem Knoten (6) zugeordnete Gerät ansteuerbar, parametrierbar, auslesbar oder auf sonstige Weise bedienbar oder verwaltbar ist, wobei die Ansteuerungseinheit (15) eine Steuerverbindung zu dem jeweils dem ausgewählten Knoten (6) zugeordneten Gerät besitzt, wobei die Ansteuerungseinheit (15) zu einer automatischen, durch die Anwahl ausgelösten Überführung eines diesem angewählten Knoten (4, 5, 6, 19) übergeordneten Knotens (4, 5, 6, 19) in die reduzierte Anzeigeform (13) eingerichtet ist und wobei die Ansteuerungseinheit (15) zur Reduzierung der zu einem Knoten (4, 5, 6, 19) am Anzeigegerät (11) dargestellten Links (7, 8, 9, 10) zu direkt diesem Knoten (4, 5, 6, 19) untergeordneten Knoten bei einer Überführung in die reduzierte Anzeigeform (13) eingerichtet ist.

2. Navigationsvorrichtung (1) nach Anspruch 1, **dadurch gekennzeichnet, dass** die Ansteuerungseinheit (15) zur Auswahl aller mit einem angewählten Knoten (4, 5, 6, 19) verknüpften Links (7, 8, 9, 10) zu direkt untergeordneten Knoten (4, 5, 6, 19) und Darstellung der Auswahl an dem Anzeigegerät (11) eingerichtet ist.

3. Navigationsvorrichtung (1) nach einem der vorangehenden Ansprüche, **dadurch gekennzeichnet, dass** der Navigationsbaum (3) einen Startknoten (17) hat, zu dem kein übergeordneter Knoten (4, 5, 6, 19) existiert, und dass zu jedem Knoten des Navigationsbaums (3) durch die Ordnungsstruktur eine Folge von Links (7, 8, 9, 10) festgelegt ist, über welche dieser Knoten (4, 5, 6, 19) mit dem Startknoten (17) verbunden ist.

4. Navigationsvorrichtung (1) nach einem der vorangehenden Ansprüche, **dadurch gekennzeichnet, dass** eine oder die Folge von Links (7, 8, 9, 10) mit ihren zugehörigen Knoten (4, 5, 6, 19) einen Navigationspfad (18) definiert und die Ansteuerungseinheit (15) zur Darstellung der übergeordneten Knoten (4, 5, 6, 19) des Navigationspfads (18) zu einem angewählten Knoten (4, 5, 6, 19) am Anzeigegerät (11) eingerichtet ist, insbesondere wobei die Ansteuerungseinheit (15) zum Ausblenden von untergeordneten Knoten (4, 5, 6, 19), die zu einem nicht angewählten Knoten des Navigationspfads (18) untergeordnet sind und nicht zum Navigationspfad (18) gehören, und/oder zum Ausblenden von Links (7, 8, 9, 10) von nicht angewählten Knoten (4, 5, 6, 19) des Navigationspfads (18) zu untergeordneten Knoten(4, 5, 6, 19), die nicht zum Navigationspfad (18) gehören, eingerichtet ist.

5. Navigationsvorrichtung (1) nach einem der vorangehenden Ansprüche, **dadurch gekennzeichnet, dass** die Ansteuerungseinheit (15) zu einer Auswahl von Knoten (4, 5, 6, 19) und Links (7, 8, 9, 10) für eine Darstellung am Anzeigegerät (11), bei welcher Abzweigungen vom Navigationspfad (18) eliminiert sind, und zu einer Darstellung der Auswahl am Anzeigegerät (11) eingerichtet ist, und/oder dass die Ansteuerungseinheit (15) zu einer Auswahl von wenigstens einem Link (7, 8, 9, 10) zu jedem dargestellten Knoten (4, 5, 6, 19) und zu einer Darstellung der Auswahl am Anzeigegerät (11) eingerichtet ist,
und/oder dass
die Ansteuerungseinheit (15) zu einer Auswahl von höchstens zwei Links (7, 8, 9, 10) zu jedem darzustellenden, nicht angewählten Knoten (4, 5, 6, 19), wobei die Links (7, 8, 9, 10) direkt mit dem jeweiligen Knoten (4, 5, 6, 19) verknüpft sind, und zu einer Darstellung der Auswahl am Anzeigegerät (11) eingerichtet ist.

6. Navigationsvorrichtung (1) nach einem der vorangehenden Ansprüche, **dadurch gekennzeichnet, dass** das Eingabemittel (14) einen Zeiger (23) aufweist, wobei das Eingabemittel (14) zur Anwahl eines Knotens (4, 5, 6, 19) durch Platzieren des Zeigers (23) über dem dargestellten Knoten (4, 5, 6, 19) und anschließendes Aktivieren eingerichtet ist, und/oder dass die Ansteuerungseinheit (15) dazu eingerichtet ist, von einer Standard-Anzeigeform (24) für alle direkt untergeordnete Knoten zu einem angewählten und/oder in der expandierten Anzeigeform (12) dargestellten Knoten (4, 5, 6, 19) in eine verminderte Anzeigeform (25) umzuschalten, wenn die Anzahl der direkt untergeordneten Knoten (4, 5, 6, 19) einen Schwellwert überschreitet,
und/oder dass
die Ansteuerungseinheit (15) für eine Tooltip-Funktion eingerichtet ist, insbesondere wobei die Ansteuerungseinheit (15) zur Überführung eines Knotens (4, 5, 6, 19) von einer verminderten Anzeigeform (25) in eine vergrößerte Anzeigeform durch Platzieren des oder eines Zeigers (23) über dem Knoten (4, 5, 6, 19) eingerichtet ist.

7. Navigationsvorrichtung (1) nach einem der vorangehenden Ansprüche, **dadurch gekennzeichnet, dass** die Ansteuerungseinheit (15), insbesondere eine Zähleinrichtung der Ansteuerungseinheit (15), zu einer Ermittlung einer Tiefenzahl für den aktuell angewählten Knoten (5) und/oder einer Anzahl von Knoten (4, 5, 6, 19) im momentan dargestellten Navigationspfad eingerichtet ist, insbesondere wobei die Ansteuerungseinheit (15) eine vorgegebene Anzahl von Knoten (4, 5, 6, 19) automatisch in eine miniaturisierte Anzeigeform (22) überführt, wenn die Anzahl von Knoten (4, 5, 6, 19) im momentan dargestellten Navigationspfad (18) einen Schwellwert überschreitet.

8. Navigationsvorrichtung (1) nach einem der vorangehenden Ansprüche, **dadurch gekennzeichnet, dass** die Ansteuerungseinheit (15) zur Darstellung der Links (7, 8, 9, 10) von einem angewählten und/oder in der expandierten Anzeigeform (12) dargestellten Knoten (4, 5, 6, 19) zu allen unmittelbar untergeordneten Knoten (4, 5, 6, 19) und zur Darstellung dieser unmittelbar untergeordneten Knoten (4, 5, 6, 19) eingerichtet ist, insbesondere wobei die Links (7, 8, 9, 10) durch Segmente (27, 28, 37) des momentan angewählten Knotens (4, 5, 6, 19), an denen sie jeweils enden, gruppiert sind, und/oder dass die Ansteuerungseinheit (15) zur Überführung der expandierten Anzeigeform (12) eines Knotens (4, 5, 6, 19) in eine lineare Anzeigeform (29), in welcher zu jedem Link (7, 8, 9, 10) und zu jedem Segment (27, 28, 37) ein Listeneintrag (31, 32, 33) einer Liste (30) generiert wird, eingerichtet ist, insbesondere wobei die Listeneinträge (31, 32, 33) von zu einem Segment (27, 28, 37) zugeordneten Links (7, 8, 9, 10) jeweils eine Unterliste (34) bilden.

9. Navigationsvorrichtung (1) nach Anspruch 8, **dadurch gekennzeichnet, dass** die Listeneinträge zu Links (7, 8, 9, 10) zwischen zwei Segmenten (27, 28, 37), insbesondere die oder eine Unterliste (34) von Listeneinträgen (31, 32, 33), in einem ersten Scrollmodus bei feststehenden Segmenten (27, 28, 37) scrollbar sind und/oder dass die Unterliste (34) der Listeneinträge (31, 32, 33) zu Links (7, 8, 9, 10) mit wenigstens einem benachbarten Listeneintrag (31, 32, 33) zu einem Segment (27, 28, 37) in einem zweiten Scrollmodus scrollbar ist,
und/oder dass
eine Scrollmodus-Umschalteinheit (36) ausgebildet ist, welche prüft, ob ein Ende einer Unterliste (34) von Listeneinträgen (31, 32, 33) von Links (7, 8, 9, 10) beim Scrollen erreicht ist, und die automatisch von dem oder einem ersten Scrollmodus in den oder einen zweiten Scrollmodus wechselt, wenn das Ergebnis der Prüfung positiv ist, insbesondere wobei der wenigstens eine benachbarte Listeneintrag (31, 32, 33) zu einem Segment (27, 28, 37) in Richtung des vorherigen Scrollens der Unterliste (34) an die Unterliste (34) angrenzt.

10. Verfahren zur Darstellung eines Navigationsbaums (3) an einem Anzeigegerät (11), wobei der Navigationsbaum (3) Knoten (4, 5, 6, 19) aufweist, die jeweils einem Gerät einer Fertigungsanlage zugeordnet sind, wobei die Knoten (4, 5, 6, 19) über gerichtete Links (7, 8, 9, 10) miteinander verknüpft sind, wobei durch die gerichteten Links (7, 8, 9, 10) eine Ordnungsstruktur definiert ist, welche zu jedem Knoten (4, 5, 6, 19) übergeordnete Knoten (4, 5, 6, 19) und untergeordnete Knoten (4, 5, 6, 19) charakterisiert, und die Knoten (4, 5, 6, 19) des Navigationsbaums (3) mit einem Eingabemittel (14) anwählbar sind, wobei zur Darstellung der Knoten (4, 5, 6, 19) des Navigationsbaums (3) an dem Anzeigegerät (11) jeweils wenigstens eine expandierte Anzeigeform (12) und eine reduzierte Anzeigeform (13) vorgehalten werden, wobei die reduzierte Anzeigeform (13) gegenüber der expandierten Anzeigeform (12) eine verminderten Informationsgehalt wiedergibt, wobei zu einem angewählten Knoten (4, 5, 6, 19) wenigstens ein übergeordneter Knoten (4, 5, 6, 19) und wenigstens ein untergeordneter Knoten (4, 5, 6, 19) an dem Anzeigegerät (11) dargestellt wird, und wobei durch Anwählen (16) des untergeordneten Knotens (4, 5, 6, 19) eine automatische Überführung des untergeordnete Knotens (4, 5, 6, 19) in die expandierte Anzeigeform (12) ausgelöst wird, **dadurch gekennzeichnet, dass** in dem angewählten Knoten (6) in der expandierten Anzeigeform (12) Schaltflächen (38) ausgebildet sind, mit welchen das dem Knoten (6) zugeordnete Gerät ansteuerbar, parametrierbar, auslesbar oder auf sonstige Weise bedienbar oder verwaltbar ist, wobei die Ansteuerungseinheit (15) eine Steuerverbindung zu dem jeweils dem ausgewählten Knoten (6) zugeordneten Gerät besitzt, wobei durch Anwählen (16) des untergeordneten Knotens (4, 5, 6, 19) eine automatische Überführung des zuvor angewählten übergeordneten Knotens (4, 5, 6, 19) in die reduzierte Anzeigeform (13) ausgelöst wird und wobei in der reduzierten Anzeigeform (13) eines Knotens (4, 5, 6, 19) weniger Links (7, 8, 9, 10) zu direkt untergeordneten Knoten (4, 5, 6, 19) an dem Anzeigegerät (11) dargestellt werden, als in der expandierten Anzeigeform (12).

11. Verfahren nach Anspruch 10, **dadurch gekennzeichnet, dass** in der expandierten Anzeigeform (12) eines Knotens (4, 5, 6, 19) alle Links (7, 8, 9, 10) zu direkt untergeordneten Knoten (4, 5, 6, 19) an dem Anzeigegerät (11) dargestellt werden.

12. Verfahren nach Anspruch 10 oder 11, **dadurch gekennzeichnet, dass** der Navigationsbaum (3) einen Startknoten (17) hat, zu dem kein übergeordneter Knoten (4, 5, 6, 19) existiert, und zu jedem Knoten (4, 5, 6, 19) des Navigationsbaums (3) eine Folge von Links (7, 8, 9, 10) festgelegt ist, über welche dieser Knoten (4, 5, 6, 19) mit dem Startknoten (17) verbunden ist, insbesondere wobei die Folge von Links (7, 8, 9, 10) einen Navigationspfad (18) definiert und zu einem angewählten Knoten die übergeordneten Knoten (4, 5, 6, 19) des Navigationspfads (18) am Anzeigegerät (11) dargestellt werden.

13. Verfahren nach einem der Ansprüche 10 bis 12, **dadurch gekennzeichnet, dass** zu einem Knoten (4, 5, 6, 19), der im Navigationspfad eines angewählten Knotens (4, 5, 6, 19) dargestellt wird, untergeordnete Knoten (4, 5, 6, 19), die nicht zum Navigationspfad (18) gehören, und/oder Links zu untergeordneten Knoten (4, 5, 6, 19), die nicht zum Navigationspfad (18) gehören, ausgeblendet werden,
und/oder dass
zu jedem am Anzeigegerät (11) dargestellten Knoten (4, 5, 6, 19) wenigstens ein mit dem Knoten (4, 5, 6, 19) verknüpfter Link (7, 8, 9, 10) dargestellt wird und/oder dass der Navigationspfad (18) abzweigungsfrei dargestellt wird, insbesondere durch Elimination von Links (7, 8, 9, 10) in der Darstellung, und/oder dass zu jedem am Anzeigegerät (11) dargestellten, nicht angewählten Knoten (4, 5, 6, 19) höchstens zwei direkt mit dem Knoten (4, 5, 6, 19) verknüpfte Links (7, 8, 9, 10) dargestellt werden.

14. Verfahren nach einem der Ansprüche 10 bis 13, **dadurch gekennzeichnet, dass** ein Zeiger (23) des Eingabemittels (14) zum Anwählen eines Knotens (4, 5, 6, 19) über dem Knoten (4, 5, 6, 19) platziert und anschließend aktiviert wird und/oder dass ein Platzieren des Zeigers (23) über einem Knoten (4, 5, 6, 19) eine Überführung des Knotens (4, 5, 6, 19) in eine vergrößerte Anzeigeform (26) auslöst,
und/oder dass
automatisch von einer Standard-Anzeigeform (24) für alle direkt zu einem angewählten und/oder in der expandierten Anzeigeform (12) dargestellten Knoten (4, 5, 6, 19) untergeordneten Knoten (4, 5, 6, 19) in eine verminderte Anzeigeform (25) umgeschaltet wird, wenn die Anzahl der direkt untergeordneten Knoten (4, 5, 6, 19) einen Schwellwert überschreitet, und/oder dass eine Tooltip-Funktion realisiert wird,
und/oder dass
in der vergrößerten Anzeigeform wenigstens ein dem Knoten (4, 5, 6, 19) zugeordnetes zusätzliches Symbol und/oder wenigstens eine dem Knoten (4, 5, 6, 19) zugeordnete Textinformation eingeblendet wird/werden.

15. Verfahren nach einem der Ansprüche 10 bis 14, **dadurch gekennzeichnet, dass** eine vorgegebene Anzahl von Knoten (4, 5, 6, 19) automatisch in eine miniaturisierte Anzeigeform (22) überführt wird, wenn die Anzahl von Knoten (4, 5, 6, 19) im momentan dargestellten Navigationspfad und/oder eine Tiefenzahl des aktuell angewählten Knotens (5) einen Schwellwert überschreitet/überschreiten, und/oder dass Links (7, 8, 9, 10) von einem angewählten und/oder in der expandierten Anzeigeform (12) dargestellten Knoten (4, 5, 6, 19) zu allen unmittelbar untergeordneten Knoten (4, 5, 6, 19) und diese unmittelbar untergeordneten Knoten (4, 5, 6, 19) dargestellt werden, insbesondere wobei die Links (7, 8, 9, 10) durch Segmente (27, 28, 37) des momentan angewählten Knotens (4, 5, 6, 19), an denen sie jeweils enden, gruppiert werden, und/oder dass die expandierte Anzeigeform (12) eines Knotens (4, 5, 6, 19) in eine lineare Anzeigeform (29), in welcher zu jedem Link (7, 8, 9, 10) und zu jedem Segment (27, 28, 37) ein Listeneintrag (31, 32, 33) einer Liste (30) generiert wird, überführt wird, insbesondere wobei die Listeneinträge (31, 32, 33) von zu einem Segment (27, 28, 37) zugeordneten Links (7, 8, 9, 10) jeweils in einer Unterliste (34) gruppiert werden,
und/oder, dass
von einem ersten Scrollmodus, in welchem die Listeneinträge (31, 32, 33) zu Links (7, 8, 9, 10) zwischen zwei Segmenten (27, 28, 37), insbesondere die oder eine Unterliste (34) von Listeneinträgen (31, 32, 33), bei feststehenden Segmenten (27, 28, 37) gescrollt wird, in einen zweiten Scrollmodus, in welchem die Unterliste (34) der Listeneinträge (31, 32, 33) zu Links (7, 8, 9, 10) mit wenigstens einem benachbarten Listeneintrag (31, 32, 33) zu einem Segment (27, 28, 37) gescrollt wird, umgeschaltet wird, wenn ein Anfang oder Ende einer Unterliste (34) von Listeneinträgen (31, 32, 33) von Links (7, 8, 9, 10) beim Scrollen erreicht ist, insbesondere wobei der wenigstens eine benachbarte Listeneintrag (31, 32, 33) zu einem Segment (27, 28, 37) in Richtung des vorherigen Scrollens der Unterliste (34) an die Unterliste (34) angrenzt.

## Claims

1. Navigation apparatus (1), comprising a storage device (2), in which a navigation tree (3) having nodes (4, 5, 6, 19) is stored, wherein each node (4, 5, 6, 19) is associated with a device in a production plant, wherein the nodes (4, 5, 6, 19) are linked to one another via directional links (7, 8, 9, 10), wherein an organizational structure is defined by the directional links (7, 8, 9, 10), said organizational structure characterizing nodes (4, 5, 6, 19) which are superordinate and nodes (4, 5, 6, 19) which are subordinate to each node (4, 5, 6, 19), and comprising a display device (11), on which the nodes (4, 5, 6, 19) can be displayed at least in an expanded display form (12) and a reduced display form (13), wherein fewer links to directly subordinate nodes are displayed on the display device in the reduced display form of a node than in the expanded display form, and comprising an input means (14), by which the nodes (4, 5, 6, 19) can be individually selected, wherein an actuation unit (15) for the display device (11) is provided, which triggers a conversion of a node (4, 5, 6, 19) into the expanded display form (12) when said node (4, 5, 6, 19) is selected, **characterized in that** buttons (38) are provided in the selected node (6) in the expanded display form (12), by which buttons the device associated with the node (6) can be actuated, parameterized, read from, or otherwise operated or managed, wherein the actuation unit (15) has a control connection to the respective device associated with the selected node (6), wherein the actuation unit (15) is configured to convert a node (4, 5, 6, 19) superordinate to said selected node (4, 5, 6, 19) into the reduced display form (13) automatically when triggered by the selection, and wherein the actuation unit (15) is configured to reduce the links (7, 8, 9, 10) displayed for a node (4, 5, 6, 19) on the display device (11), which link to nodes directly subordinate to said node (4, 5, 6 19), upon conversion to the reduced display form (13).

2. Navigation apparatus (1) according to claim 1, **characterized in that** the actuation unit (15) is configured to select all the links (7, 8, 9, 10) linked to a selected node (4, 5, 6, 19) and linking to directly subordinate nodes (4, 5, 6, 19) and to display the selection on the display device (11).

3. Navigation apparatus (1) according to any one of the preceding claims, **characterized in that** the navigation tree (3) has a start node (17), for which no superordinate node (4, 5, 6, 19) exists, and **in that**, for each node of the navigation tree (3), a succession of links (7, 8, 9, 10) is defined by the organizational structure, via which links said node (4, 5, 6, 19) is connected to the start node (17).

4. Navigation apparatus (1) according to any one of the preceding claims, **characterized in that** a or the succession of links (7, 8, 9, 10) together with their associated nodes (4, 5, 6, 19) defines a navigation path (18), and the actuation unit (15) is configured to display on the display device (11) the nodes (4, 5, 6, 19) of the navigation path (18) which are superordinate to a selected node (4, 5, 6, 19), in particular wherein the actuation unit (15) is configured to hide subordinate nodes (4, 5, 6, 19) which are subordinate to a non-selected node of the navigation path (18) and which do not belong to the navigation path (18), and/or to hide links (7, 8, 9, 10) from non-selected nodes (4, 5, 6, 19) of the navigation path (18) to subordinate nodes (4, 5, 6, 19) which do not belong to the navigation path (18).

5. Navigation apparatus (1) according to any one of the preceding claims, **characterized in that** the actuation unit (15) is configured to select nodes (4, 5, 6, 19) and links (7, 8, 9, 10) for display on the display device (11), in which branchings from the navigation path (18) are eliminated, and to display the selection on the display device (11), and/or **in that** the actuation unit (15) is configured to select at least one link (7, 8, 9, 10) for each displayed node (4, 5, 6, 19) and to display the selection on the display device (11),
and/or **in that**
the actuation unit (15) is configured to select at most two links (7, 8, 9, 10) for each non-selected node (4, 5, 6, 19) to be displayed, the links (7, 8, 9, 10) being linked directly to the respective node (4, 5, 6, 19), and to display the selection on the display device (11).

6. Navigation apparatus (1) according to any one of the preceding claims, **characterized in that** the input means (14) comprises a pointer (23), wherein the input means (14) is configured to select a node (4, 5, 6, 19) by placing the pointer (23) over the displayed node (4, 5, 6, 19) and then activating, and/or **in that** the actuation unit (15) is configured to switch from a standard display form (24) for all nodes directly subordinate to a node (4, 5, 6, 19) that has been selected and/or that is displayed in the expanded display form (12) to a diminished display form (25) if the number of directly subordinate nodes (4, 5, 6, 19) exceeds a threshold value,
and/or **in that**
the actuation unit (15) is configured for a tooltip function, in particular wherein the actuation unit (15) is configured to convert a node (4, 5, 6, 19) from a diminished display form (25) to an enlarged display form by placing the or a pointer (23) over the node (4, 5, 6, 19).

7. Navigation apparatus (1) according to any one of the preceding claims, **characterized in that** the actuation unit (15), in particular a counter of the actuation unit (15), is configured to determine a depth number for the currently selected node (5) and/or a number of nodes (4, 5, 6, 19) in the currently displayed navigation path, in particular wherein the actuation unit (15) converts a predefined number of nodes (4, 5, 6, 19) into a miniaturized display form (22) automatically if the number of nodes (4, 5, 6, 19) in the currently displayed navigation path (18) exceeds a threshold value.

8. Navigation apparatus (1) according to any one of the preceding claims, **characterized in that** the actuation unit (15) is configured to display the links (7, 8, 9, 10) from a node (4, 5, 6, 19) that has been selected and/or that is displayed in the expanded display form (12) to all directly subordinate nodes (4, 5, 6, 19) and to display said directly subordinate nodes (4, 5, 6, 19), in particular wherein the links (7, 8, 9, 10) are grouped by segments (27, 28, 37) of the currently selected node (4, 5, 6, 19), at which they end in each case, and/or **in that** the actuation unit (15) is configured to convert the expanded display form (12) of a node (4, 5, 6, 19) into a linear display form (29), in which a list entry (31, 32, 33) in a list (30) is generated for each link (7, 8, 9, 10) and for each segment (27, 28, 37), in particular wherein the list entries (31, 32, 33) of links (7, 8, 9, 10) associated with one segment (27, 28, 37) in each case form a sub-list (34).

9. Navigation apparatus (1) according to claim 8, **characterized in that** the list entries for links (7, 8, 9, 10) between two segments (27, 28, 37), in particular the or a sub-list (34) of list entries (31, 32, 33), are scrollable in a first scroll mode with static segments (27, 28, 37), and/or **in that** the sub-list (34) of the list entries (31, 32, 33) for links (7, 8, 9, 10) having at least one neighbouring list entry (31, 32, 33) for a segment (27, 28, 37) is scrollable in a second scroll mode,
and/or **in that**
a scroll mode switching unit (36) is provided, which checks whether an end of a sub-list (34) of list entries (31, 32, 33) of links (7, 8, 9, 10) is reached when scrolling, and which changes from the or a first scroll mode to the or a second scroll mode automatically if the result of the check is positive, in particular wherein the at least one neighbouring list entry (31, 32, 33) for a segment (27, 28, 37) is adjacent on the sub-list (34) in the direction of previous scrolling of the sub-list (34).

10. Method for displaying a navigation tree (3) on a display device (11), wherein the navigation tree (3) has nodes (4, 5, 6, 19) which are each associated with a device in a production plant, wherein the nodes (4, 5, 6, 19) are linked to one another via directional links (7, 8, 9, 10), wherein an organizational structure is defined by the directional links (7, 8, 9, 10), said organizational structure characterizing nodes (4, 5, 6, 19) which are superordinate and nodes (4, 5, 6, 19) which are subordinate to each node (4, 5, 6, 19), and the nodes (4, 5, 6, 19) of the navigation tree (3) can be selected using an input means (14), wherein at least an expanded display form (12) and a reduced display form (13) are provided for displaying the nodes (4, 5, 6, 19) of the navigation tree (3) on the display device (11), wherein the reduced display form (13) shows a diminished information content compared to the expanded display form (12), wherein, for a selected node (4, 5, 6, 19), at least one superordinate node (4, 5, 6, 19) and at least one subordinate node (4, 5, 6, 19) is displayed on the display device (11), and wherein, by selecting (16) the subordinate node (4, 5, 6, 19), an automatic conversion of the subordinate node (4, 5, 6, 19) into the expanded display form (12) is triggered, **characterized in that** buttons (38) are provided in the selected node (6) in the expanded display form (12), by which buttons the device associated with the node (6) can be actuated, parameterized, read from, or otherwise operated or managed, wherein the actuation unit (15) has a control connection to the respective device associated with the selected node (6), wherein, by selecting (16) the subordinate node (4, 5, 6, 19), an automatic conversion of the previously selected superordinate node (4, 5, 6, 19) into the reduced display form (13) is triggered, and wherein fewer links (7, 8, 9, 10) to directly subordinate nodes (4, 5, 6, 19) are displayed on the display device (11) in the reduced display form (13) of a node (4, 5, 6, 19) than in the expanded display form (12).

11. Method according to claim 10, **characterized in that**, in the expanded display form (12) of a node (4, 5, 6, 19), all the links (7, 8, 9, 10) to directly subordinate nodes (4, 5, 6, 19) are displayed on the display device (11).

12. Method according to claim 10 or 11, **characterized in that** the navigation tree (3) has a start node (17), for which no superordinate node (4, 5, 6, 19) exists, and, for each node (4, 5, 6, 19) of the navigation tree (3), a succession of links (7, 8, 9, 10) is defined, via which links said node (4, 5, 6, 19) is connected to the start node (17), in particular wherein the succession of links (7, 8, 9, 10) defines a navigation path (18), and, for a selected node, the superordinate nodes (4, 5, 6, 19) of the navigation path (18) are displayed on the display device (11).

13. Method according to any one of claims 10 to 12, **characterized in that** nodes (4, 5, 6, 19) which are subordinate to a node (4, 5, 6, 19) displayed in the navigation path of a selected node (4, 5, 6, 19) and which do not belong to the navigation path (18) are hidden, and/or links to subordinate nodes (4, 5, 6, 19) which do not belong to the navigation path (18) are hidden,
and/or **in that**
for each node (4, 5, 6, 19) displayed on the display device (11), at least one link (7, 8, 9, 10) linked to the node (4, 5, 6, 19) is displayed, and/or **in that** the navigation path (18) is displayed without branchings, in particular by eliminating links (7, 8, 9, 10) in the display, and/or **in that**, for each non-selected node (4, 5, 6, 19) displayed on the display device (11), at most two links (7, 8, 9, 10) directly linked to the node (4, 5, 6, 19) are displayed.

14. Method according to any one of claims 10 to 13, **characterized in that**, in order to select a node (4, 5, 6, 19), a pointer (23) of the input means (14) is placed over the node (4, 5, 6, 19) and is then activated, and/or **in that** placing the pointer (23) over a node (4, 5, 6, 19) triggers a conversion of the node (4, 5, 6, 19) into an enlarged display form (26),
and/or **in that**
for all nodes (4, 5, 6, 19) directly subordinate to a node (4, 5, 6, 19) that is selected and/or that is displayed in the expanded display form (12), a switch from a standard display form (24) to a diminished display form (25) takes place automatically if the number of directly subordinate nodes (4, 5, 6, 19) exceeds a threshold value, and/or **in that** a tooltip function is realized,
and/or **in that**
in the enlarged display form at least one additional symbol associated with the node (4, 5, 6, 19) and/or at least one piece of text information associated with the node (4, 5, 6, 19) is made visible.

15. Method according to any one of claims 10 to 14, **characterized in that** a predefined number of nodes (4, 5, 6, 19) is converted into a miniaturized display form (22) automatically if the number of nodes (4, 5, 6, 19) in the currently displayed navigation path and/or a depth number of the currently selected node (5) exceed(s) a threshold value, and/or **in that** links (7, 8, 9, 10) from a node (4, 5, 6, 19) that has been selected and/or that is displayed in the expanded display form (12) to all directly subordinate nodes (4, 5, 6, 19), and said directly subordinate nodes (4, 5, 6, 19), are displayed, in particular wherein the links (7, 8, 9, 10) are grouped by segments (27, 28, 37) of the currently selected node (4, 5, 6, 19), at which they end in each case, and/or **in that** the expanded display form (12) of a node (4, 5, 6, 19) is converted into a linear display form (29), in which a list entry (31, 32, 33) in a list (30) is generated for each link (7, 8, 9, 10) and for each segment (27, 28, 37), in particular wherein the list entries (31, 32, 33) of links (7, 8, 9, 10) associated with one segment (27, 28, 37) are in each case grouped in a sub-list (34),
and/or **in that**
a switch from a first scroll mode, in which scrolling takes place through the list entries (31, 32, 33) for links (7, 8, 9, 10) between two segments (27, 28, 37), in particular the or a sub-list (34) of list entries (31, 32, 33), with static segments (27, 28, 37), to a second scroll mode, in which scrolling takes place through the sub-list (34) of list entries (31, 32, 33) for links (7, 8, 9, 10) having at least one neighbouring list entry (31, 32, 33) for a segment (27, 28, 37), takes place if a start or end of a sub-list (34) of list entries (31, 32, 33) of links (7, 8, 8, 10) is reached when scrolling, in particular wherein the at least one neighbouring list entry (31, 32, 33) for a segment (27, 28, 37) adjoins the sub-list (34) in the direction of previous scrolling of the sub-list (34).

## Revendications

1. Dispositif de navigation (1) comprenant un dispositif de mémorisation (2) dans lequel est stockée une arborescence de navigation (3) comportant des points nodaux (4, 5, 6, 19), chaque point nodal (4, 5, 6, 19) étant affecté à un appareil d'une installation de production, lesdits points nodaux (4, 5, 6, 19) étant combinés les uns aux autres par l'intermédiaire de liens orientés (7, 8, 9, 10), lesquels liens orientés (7, 8, 9, 10) ont pour effet de définir une structure d'ordonnancement caractérisant des points nodaux (4, 5, 6, 19) de niveau supérieur et des points nodaux (4, 5, 6, 19) subordonnés, en rapport avec chaque point nodal (4, 5, 6, 19) ; un appareil d'affichage (11), sur lequel les points nodaux (4, 5, 6, 19) peuvent être visualisés au moins sous une forme d'affichage (12) étendue et sous une forme d'affichage (13) réduite, sachant que, dans ladite forme d'affichage réduite d'un point nodal, le nombre de liens avec des points nodaux directement subordonnés, visualisés sur ledit appareil d'affichage, est moindre que dans ladite forme étendue ; et un moyen d'entrée (14) par lequel lesdits points nodaux (4, 5, 6, 19) peuvent être sélectionnés individuellement, ledit appareil d'affichage (11) étant pourvu d'une unité de pilotage (15) qui déclenche un transfert d'un point nodal (4, 5, 6, 19) vers ladite forme d'affichage (12) étendue, lors de la sélection de ce point nodal (4, 5, 6, 19), **caractérisé par** la formation au point nodal sélectionné (6), dans la forme d'affichage (12) étendue, de surfaces de commutation (38) par lesquelles l'appareil affecté audit point nodal (6) peut être piloté, paramétré, lu, voire actionné ou géré d'une quelconque manière, ladite unité de pilotage (15) étant munie d'une liaison de commande avec l'appareil respectivement affecté audit point nodal sélectionné (6), sachant que l'unité de pilotage (15) est agencée en vue de transférer automatiquement vers la forme d'affichage (13) réduite, par déclenchement consécutif à ladite sélection, un point nodal (4, 5, 6, 19) de niveau supérieur à celui de ce point nodal (4, 5, 6, 19) sélectionné, et sachant que ladite unité de pilotage (15) est agencée en vue de diminuer, lors d'un transfert vers ladite forme d'affichage (13) réduite, les liens (7, 8, 9, 10) avec un point nodal (4, 5, 6, 19), visualisés sur l'appareil d'affichage (11), qui se rapportent à des points nodaux directement subordonnés à ce point nodal (4, 5, 6, 19).

2. Dispositif de navigation (1) selon la revendication 1, **caractérisé par le fait que** l'unité de pilotage (15) est agencée en vue de sélectionner tous les liens (7, 8, 9, 10) avec des points nodaux (4, 5, 6, 19) directement subordonnés, qui sont combinés à un point nodal (4, 5, 6, 19) sélectionné, et en vue de visualiser la sélection sur l'appareil d'affichage (11).

3. Dispositif de navigation (1) selon l'une des revendications précédentes, **caractérisé par le fait que** l'arborescence de navigation (3) présente un point nodal de départ (17) en rapport avec lequel il n'existe aucun point nodal (4, 5, 6, 19) de niveau supérieur ; et **par le fait que** la structure d'ordonnancement établit fermement, pour chaque point nodal de ladite arborescence de navigation (3), une séquence de liens (7, 8, 9, 10) par l'intermédiaire de laquelle ce point nodal (4, 5, 6, 19) est relié audit point nodal de départ (17).

4. Dispositif de navigation (1) selon l'une des revendications précédentes, **caractérisé par le fait qu'**une, ou la séquence de liens (7, 8, 9, 10) définit un chemin de navigation (18) par ses points nodaux (4, 5, 6, 19) associés, et l'unité de pilotage (15) est agencée en vue de visualiser, sur l'appareil d'affichage (11), les points nodaux (4, 5, 6, 19) dudit chemin de navigation (18) qui sont de niveau supérieur à celui d'un point nodal (4, 5, 6, 19) sélectionné, ladite unité de pilotage (15) étant notamment agencée en vue de masquer des points nodaux subordonnés (4, 5, 6, 19) qui sont subordonnés à un point nodal non sélectionné dudit chemin de navigation (18) et ne font pas partie dudit chemin de navigation (18), et/ou en vue de masquer des liens (7, 8, 9, 10) de points nodaux non sélectionnés (4, 5, 6, 19) dudit chemin de navigation (18) avec des points nodaux subordonnés (4, 5, 6, 19) ne faisant pas partie dudit chemin de navigation (18).

5. Dispositif de navigation (1) selon l'une des revendications précédentes, **caractérisé par le fait que** l'unité de pilotage (15) est agencée en vue d'une sélection de points nodaux (4, 5, 6, 19) et de liens (7, 8, 9, 10) ciblant, sur l'appareil d'affichage (11), une visualisation dans laquelle des dérivations du chemin de navigation (18) sont éliminées, et en vue d'une visualisation de ladite sélection sur ledit appareil d'affichage (11) ; et/ou **par le fait que** ladite unité de pilotage (15) est agencée en vue d'une sélection d'au moins un lien (7, 8, 9, 10) avec chaque point nodal (4, 5, 6, 19) visualisé, et en vue d'une visualisation de ladite sélection sur ledit appareil d'affichage (11) ;
et/ou **par le fait que**
ladite unité de pilotage (15) est agencée en vue d'une sélection d'un nombre maximal de deux liens (7, 8, 9, 10) avec chaque point nodal (4, 5, 6, 19) non sélectionné, devant être visualisé, lesdits liens (7, 8, 9, 10) étant directement combinés au point nodal (4, 5, 6, 19) considéré, et en vue d'une visualisation de ladite sélection sur ledit appareil d'affichage (11).

6. Dispositif de navigation (1) selon l'une des revendications précédentes, **caractérisé par le fait que** le moyen d'entrée (14) est muni d'un index (23), ledit moyen d'entrée (14) étant agencé en vue de la sélection d'un point nodal (4, 5, 6, 19) par mise en place dudit index (23) au-dessus du point nodal (4, 5, 6, 19) visualisé, avec activation dans l'enchaînement direct ; et/ou **par le fait que** l'unité de pilotage (15) est agencée en vue de commuter à une forme d'affichage (25) diminuée, à partir d'une forme d'affichage (24) standard pour tous les points nodaux directement subordonnés à un point nodal (4, 5, 6, 19) sélectionné et/ou visualisé sous la forme d'affichage (12) étendue, lorsque le nombre desdits points nodaux (4, 5, 6, 19) directement subordonnés excède une valeur de seuil ;
et/ou **par le fait que**
ladite unité de pilotage (15) est agencée en vue d'exécuter une fonction d'info-bulle, ladite unité de pilotage (15) étant notamment agencée en vue du transfert d'un point nodal (4, 5, 6, 19) vers une forme d'affichage agrandie, à partir d'une forme d'affichage (25) diminuée, en plaçant l'index ou un index (23) au-dessus dudit point nodal (4, 5, 6, 19).

7. Dispositif de navigation (1) selon l'une des revendications précédentes, **caractérisé par le fait que** l'unité de pilotage (15), notamment un dispositif de comptage de ladite unité de pilotage (15), et agencé(e) en vue d'une spécification d'un numéro de profondeur assigné au point nodal (5) effectivement sélectionné, et/ou d'un nombre de points nodaux (4, 5, 6, 19) dans le chemin de navigation momentanément visualisé, sachant notamment que ladite unité de pilotage (15) transfère automatiquement un nombre préétabli de points nodaux (4, 5, 6, 19) vers une forme d'affichage (22) miniaturisée lorsque le nombre de points nodaux (4, 5, 6, 19) excède une valeur de seuil dans ledit chemin de navigation (18) momentanément visualisé.

8. Dispositif de navigation (1) selon l'une des revendications précédentes, **caractérisé par le fait que** l'unité de pilotage (15) est agencée en vue de la visualisation des liens (7, 8, 9, 10) d'un point nodal (4, 5, 6, 19), sélectionné et/ou visualisé sous la forme d'affichage (12) étendue, avec tous les points nodaux (4, 5, 6, 19) directement subordonnés, et en vue de la visualisation de ces points nodaux (4, 5, 6, 19) directement subordonnés, sachant notamment que lesdits liens (7, 8, 9, 10) sont regroupés par des segments (27, 28, 37) du point nodal (4, 5, 6, 19) momentanément sélectionné, au niveau desquels ils s'achèvent à chaque fois ; et/ou **par le fait que** ladite unité de pilotage (15) est agencée en vue du transfert de la forme d'affichage (12) étendue d'un point nodal (4, 5, 6, 19) vers une forme d'affichage (29) linéaire dans laquelle est engendrée une entrée (31, 32, 33) d'une liste (30) en rapport avec chaque lien (7, 8, 9, 10) et avec chaque segment (27, 28, 37), sachant notamment que les entrées de liste (31, 32, 33) de liens (7, 8, 9, 10) affectés à un segment (27, 28, 37) forment, à chaque fois, une sous-liste (34).

9. Dispositif de navigation (1) selon la revendication 8, **caractérisé par le fait que** les entrées de liste en rapport avec des liens (7, 8, 9, 10) entre deux segments (27, 28, 37), en particulier la ou une sous-liste (34) d'entrées (31, 32, 33) de liste, peuvent être mises en défilement dans un premier mode de défilement en présence de segments (27, 28, 37) fixes ; et/ou **par le fait que** la sous-liste (34) des entrées de liste (31, 32, 33) se rapportant à des liens (7, 8, 9, 10) avec au moins une entrée de liste (31, 32, 33) voisine, se rapportant à un segment (27, 28, 37), peut être mise en défilement dans un second mode de défilement ;
et/ou **par le fait**
**qu'**une unité (36) de commutation de modes de défilement est conçue pour vérifier si la fin d'une sous-liste (34) d'entrées de liste (31, 32, 33) de liens (7, 8, 9, 10) est atteinte, lors de la mise en défilement, et alterne automatiquement pour passer du, ou d'un premier mode de défilement, au ou à un second mode de défilement lorsque le résultat de la vérification est positif, sachant notamment que ladite entrée de liste (31, 32, 33) voisine à présence minimale, se rapportant à un segment (27, 28, 37), est limitrophe de la sous-liste (34) dans la direction de la mise en défilement précédente de ladite sous-liste (34).

10. Procédé de visualisation d'une arborescence de navigation (3) sur un appareil d'affichage (11), ladite arborescence de navigation (3) comportant des points nodaux (4, 5, 6, 19) respectivement affectés à un appareil d'une installation de production, lesquels points nodaux (4, 5, 6, 19) sont combinés les uns aux autres par l'intermédiaire de liens orientés (7, 8, 9, 10), lesdits liens orientés (7, 8, 9, 10) définissant une structure d'ordonnancement qui caractérise des points nodaux (4, 5, 6, 19) de niveau supérieur et des points nodaux (4, 5, 6, 19) subordonnés, en rapport avec chaque point nodal (4, 5, 6, 19), les points nodaux (4, 5, 6, 19) de ladite arborescence de navigation (3) pouvant être sélectionnés à l'aide d'un moyen d'entrée (14), sachant qu'au moins une forme d'affichage (12) étendue et une forme d'affichage (13) réduite sont réservées, à chaque fois, en vue de la visualisation desdits points nodaux (4, 5, 6, 19) de l'arborescence de navigation (3) sur ledit appareil d'affichage (11), laquelle forme d'affichage (13) réduite reproduit un contenu informatif diminué par rapport à ladite forme d'affichage (12) étendue, sachant qu'au moins un point nodal (4, 5, 6, 19) de niveau supérieur à celui d'un point nodal (4, 5, 6, 19) sélectionné, et au moins un point nodal (4, 5, 6, 19) subordonné à ce dernier, sont visualisés sur l'appareil d'affichage (11), et sachant qu'une sélection (16) du point nodal (4, 5, 6, 19) subordonné a pour effet de déclencher un transfert automatique dudit point nodal (4, 5, 6, 19) subordonné vers ladite forme d'affichage (12) étendue, **caractérisé par** la formation au point nodal sélectionné (6), dans la forme d'affichage (12) étendue, de surfaces de commutation (38) par lesquelles l'appareil affecté audit point nodal (6) peut être piloté, paramétré, lu, voire actionné ou géré d'une quelconque manière, l'unité de pilotage (15) étant munie d'une liaison de commande avec l'appareil respectivement affecté audit point nodal sélectionné (6), sachant qu'une sélection (16) du point nodal (4, 5, 6, 19) subordonné a pour effet de déclencher un transfert automatique, vers la forme d'affichage (13) réduite, du point nodal (4, 5, 6, 19) de niveau supérieur préalablement sélectionné, et sachant que, dans ladite forme d'affichage réduite (13) d'un point nodal (4, 5, 6, 19), le nombre de liens (7, 8, 9, 10) avec des points nodaux (4, 5, 6, 19) directement subordonnés, visualisés sur l'appareil d'affichage (11), est moindre que dans ladite forme d'affichage (12) étendue.

11. Procédé selon la revendication 10, **caractérisé par le fait que**, dans la forme d'affichage étendue (12) d'un point nodal (4, 5, 6, 19), tous les liens (7, 8, 9, 10) avec des points nodaux (4, 5, 6, 19) directement subordonnés sont visualisés sur l'appareil d'affichage (11).

12. Procédé selon la revendication 10 ou 11, **caractérisé par le fait que** l'arborescence de navigation (3) présente un point nodal de départ (17) en rapport avec lequel il n'existe aucun point nodal (4, 5, 6, 19) de niveau supérieur, sachant qu'une séquence de liens (7, 8, 9, 10) est fermement établie pour chaque point nodal (4, 5, 6, 19) de ladite arborescence de navigation (3), séquence par l'intermédiaire de laquelle ce point nodal (4, 5, 6, 19) est relié audit point nodal de départ (17), sachant notamment que ladite séquence de liens (7, 8, 9, 10) définit un chemin de navigation (18) et que les points nodaux (4, 5, 6, 19) dudit chemin de navigation (18), dont le niveau est supérieur à celui d'un point nodal sélectionné, sont visualisés sur l'appareil d'affichage (11).

13. Procédé selon l'une des revendications 10 à 12, **caractérisé par** un masquage de points nodaux (4, 5, 6, 19) qui sont subordonnés à un point nodal (4, 5, 6, 19) visualisé dans le chemin de navigation d'un point nodal (4, 5, 6, 19) sélectionné, et ne font pas partie du chemin de navigation (18), et/ou de liens avec des points nodaux subordonnés (4, 5, 6, 19) ne faisant pas partie dudit chemin de navigation (18) ;
et/ou par le fait
qu'en rapport avec chaque point nodal (4, 5, 6, 19) visualisé sur l'appareil d'affichage (11), au moins un lien (7, 8, 9, 10) combiné audit point nodal (4, 5, 6, 19) est visualisé ;
et/ou par le fait que le chemin de navigation (18) est visualisé avec absence de dérivations, notamment par élimination de liens (7, 8, 9, 10) dans l'affichage ; et/ou par le fait qu'en rapport avec chaque point nodal (4, 5, 6, 19) non sélectionné, visualisé sur ledit appareil d'affichage (11), au maximum deux liens (7, 8, 9, 10) directement combinés audit point nodal (4, 5, 6, 19) sont visualisés.

14. Procédé selon l'une des revendications 10 à 13, **caractérisé par le fait que**, pour sélectionner un point nodal (4, 5, 6, 19), un index (23) du moyen d'entrée (14) est placé au-dessus dudit point nodal (4, 5, 6, 19) et est activé dans l'enchaînement direct ; et/ou **par le fait qu'**une mise en place dudit index (23) au-dessus d'un point nodal (4, 5, 6, 19) déclenche un transfert dudit point nodal (4, 5, 6, 19) vers une forme d'affichage (26) agrandie ;
et/ou **par le fait**
**qu'**à partir d'une forme d'affichage (24) standard, pour tous les points nodaux (4, 5, 6, 19) directement subordonnés à un point nodal (4, 5, 6, 19) sélectionné et/ou visualisé sous la forme d'affichage (12) étendue, il s'opère une commutation automatique à une forme d'affichage (25) diminuée lorsque le nombre desdits points nodaux (4, 5, 6, 19) directement subordonnés excède une valeur de seuil ; et/ou **par le fait qu'**une fonction d'info-bulle est concrètement exécutée ;
et/ou par
le masquage, dans ladite forme d'affichage agrandie, d'au moins un symbole supplémentaire affecté au point nodal (4, 5, 6, 19) et/ou d'au moins une information sous forme de texte, affectée audit point nodal (4, 5, 6, 19).

15. Procédé selon l'une des revendications 10 à 14, **caractérisé par le fait qu'**un nombre préétabli de points nodaux (4, 5, 6, 19) est automatiquement transféré vers une forme d'affichage (22) miniaturisée lorsque le nombre de points nodaux (4, 5, 6, 19) dans le chemin de navigation momentanément visualisé, et/ou un numéro de profondeur du point nodal (5) effectivement sélectionné, excède(nt) une valeur de seuil ; et/ou par une visualisation de liens (7, 8, 9, 10) d'un point nodal (4, 5, 6, 19) sélectionné et/ou visualisé sous la forme d'affichage (12) étendue, avec tous les points nodaux (4, 5, 6, 19) directement subordonnés, et de ces points nodaux (4, 5, 6, 19) directement subordonnés, sachant notamment que lesdits liens (7, 8, 9, 10) sont regroupés par des segments (27, 28, 37) du point nodal (4, 5, 6, 19) momentanément sélectionné, au niveau desquels ils s'achèvent à chaque fois ; et/ou **par le fait que** la forme d'affichage (12) étendue d'un point nodal (4, 5, 6, 19) est transférée vers une forme d'affichage (29) linéaire dans laquelle est engendrée une entrée (31, 32, 33) d'une liste (30) en rapport avec chaque lien (7, 8, 9, 10) et avec chaque segment (27, 28, 37), sachant notamment que les entrées de liste (31, 32, 33) de liens (7, 8, 9, 10) affectés à un segment (27, 28, 37) sont, à chaque fois, regroupées dans une sous-liste (34) ;
et/ou **par le fait**
**qu'**il s'opère une commutation à partir d'un premier mode de défilement dans lequel les entrées de liste (31, 32, 33) en rapport avec des liens (7, 8, 9, 10) entre deux segments (27, 28, 37), en particulier la ou une sous-liste (34) d'entrées (31, 32, 33) de liste, sont mises en défilement en présence de segments (27, 28, 37) fixes, à un second mode de défilement dans lequel la sous-liste (34) des entrées de liste (31, 32, 33) se rapportant à des liens (7, 8, 9, 10) avec au moins une entrée de liste (31, 32, 33) voisine, se rapportant à un segment (27, 28, 37), est mise en défilement, lorsqu'un début ou une fin d'une sous-liste (34) d'entrées de liste (31, 32, 33) de liens (7, 8, 9, 10) est atteint(e) lors de la mise en défilement, sachant notamment que ladite entrée de liste (31, 32, 33) voisine à présence minimale, se rapportant à un segment (27, 28, 37), est limitrophe de la sous-liste (34) dans la direction de la mise en défilement précédente de ladite sous-liste (34).
